# EUROPEAN PATENT APPLICATION

(11) **EP 4 776 674 A1**
(43) Date of publication of application: **15.07.2026**
(21) Application number: 24870637.6
(22) Date of filing: 23.09.2024
(51) Int. Cl.: H04W 16/14

(54) **COOPERATIVE COMMUNICATION METHOD AND APPARATUS, DEVICE, AND STORAGE MEDIUM**

(30) Priority: 28.09.2023 CN 202311292179
(71) Applicant: HUAWEI TECHNOLOGIES CO., LTD., Shenzhen 518129 (CN)
(72) Inventor: GUO, Yuchen, Shenzhen, Guangdong 518129 (CN); LI, Yunbo, Shenzhen, Guangdong 518129 (CN); GAN, Ming, Shenzhen, Guangdong 518129 (CN)
(74) Representative: Gill Jennings & Every LLP
(86) International application number: PCT/CN2024/120270
(87) International publication number: WO 2025/067093

(57) **Abstract**

This application provides a coordinated communication method, apparatus, and device, and a storage medium. The method may be performed by a first device or a component in the first device. The method includes: The first device sends a first radio frame to a second device, and receives a second radio frame from the second device, and a transmission agreement is set up between the first device and the second device, so that the first device and the second device share a transmission resource under the transmission agreement, to provide a basis for implementing multi-device coordinated transmission.

## Description

This application claims priority to Chinese Patent Application No. 202311292179.8, filed with the China National Intellectual Property Administration on September 28, 2023 and entitled "COORDINATED COMMUNICATION METHOD, APPARATUS, AND DEVICE, AND STORAGE MEDIUM", which is incorporated herein by reference in its entirety.

### TECHNICAL FIELD

This application relates to the field of communication technologies, and in particular, to a coordinated communication method, apparatus, and device, and a storage medium.

### BACKGROUND

With development of wireless networks and popularization of wireless local area network (wireless local area network, WLAN) technologies, WLAN devices become increasingly dense. Because wireless access points (access point, AP) are easy to deploy, increasingly dense APs also cause more inter-cell interference. Therefore, in a future wireless fidelity (Wireless Fidelity, Wi-Fi) technology, it is considered to reduce inter-cell interference through coordination between APs, to improve quality of service for users.

However, during coordination between the APs, how to set up a transmission agreement between the APs is an urgent problem that needs to be resolved currently. In a wireless network, there is also a problem of setting up a transmission agreement between other devices to implement coordinated communication.

### SUMMARY

Embodiments of this application provide a coordinated communication method, apparatus, and device, and a storage medium. When coordinated communication needs to be performed between devices in a wireless network, a solution for setting up a transmission agreement is provided.

According to a first aspect, an embodiment of this application provides a coordinated communication method. The method is performed by a first device or a component in the first device, for example, a chip, a chip system, or another functional module that can invoke and execute a program.

The method includes: The first device sends a first radio frame to a second device, and receives a second radio frame from the second device, and a transmission agreement is set up between the first device and the second device, so that the first device and the second device share a transmission resource under the transmission agreement, to provide a basis for implementing multi-device coordinated transmission.

In some embodiments, the first radio frame carries first indication information, and the first indication information indicates at least one coordination mode between the first device and the second device; and the second radio frame carries second indication information, and the second indication information indicates whether the at least one coordination mode is successfully set up. This is to implement setup (that is, negotiation) of a coordination mode in the transmission agreement.

In an example of the first indication information, the first indication information includes a first field, and a value of the first field indicates the at least one coordination mode. In another example of the first indication information, the first indication information includes at least two second fields, each second field corresponds to one coordination mode, and a value of the second field indicates whether the corresponding coordination mode is a coordination mode between the first device and the second device. In both the two examples, the coordination mode can be accurately indicated. In the first example, signaling overheads can be reduced when a quantity of indicated coordination modes is small. In the second example, processing complexity of the second device and the second device can be reduced.

Optionally, the coordination mode may include at least one of coordinated time division multiple access co-TDMA, coordinated orthogonal frequency division multiple access co-OFDMA, coordinated spatial reuse co-SR, or coordinated restricted target wake time co-RTWT.

In some embodiments, the first radio frame carries third indication information, the third indication information indicates valid duration of the transmission agreement, and in a first time constrained by the valid duration, the first device and the second device share a transmission resource. The valid duration is negotiated by using the first radio frame, and the valid time of the transmission agreement is constrained, so that additional system overheads caused by the transmission agreement can be avoided.

In some embodiments, the second radio frame carries the third indication information, and the third indication information carried in the second radio frame is used to set up the transmission agreement. In this embodiment, the second device determines the transmission agreement based on the third indication information carried in the second radio frame, to indicate a final value of the valid duration, and complete negotiation of the valid duration in the transmission agreement.

In some embodiments, when transmission resource sharing fails to be initiated in the first time, the transmission agreement is suspended or ended, to reduce system overheads caused by maintaining the transmission agreement.

In a possible implementation of the foregoing embodiment, when the second device fails to initiate transmission resource sharing, the first device sends a third radio frame to the second device. In another possible implementation of the foregoing embodiment, the first device receives a third radio frame sent by the second device when the first device fails to initiate transmission resource sharing. The third radio frame is used to suspend or end the transmission agreement.

In some embodiments, a start moment of the first time is determined based on a time at which transmission resource sharing is successfully initiated for a last time, so that a valid time of the transmission agreement is prolonged each time transmission resource sharing is successfully initiated, to implement sustainability of coordinated transmission.

In some embodiments, in a case in which transmission resource sharing fails to be initiated after the transmission agreement is set up, the start moment of the first time is determined based on a time at which the transmission agreement is set up, so that the valid time of the transmission agreement is constrained after the transmission agreement is set up.

In some embodiments, a transmission resource indicated by the first device when the first device initiates transmission resource sharing meets the following first condition, and/or a transmission resource indicated by the second device when the second device initiates transmission resource sharing meets the following first condition, and transmission resource sharing is successfully initiated; and the first condition includes at least one of the following:

Duration of the transmission resource is greater than or equal to a first threshold;
a bandwidth of the transmission resource is greater than or equal to a second threshold;
a time-frequency domain size of the transmission resource is greater than or equal to a third threshold, and the time-frequency domain size is a product of the duration and the bandwidth of the transmission resource;
a power of the transmission resource is greater than or equal to a fourth threshold; and
a quantity of bits carried by the transmission resource is greater than or equal to a fifth threshold.

The first device determines, based on the first condition, that the shared transmission resource is sufficient, for example, the shared transmission resource can meet data transmission in coordinated communication, to ensure reliable transmission of coordinated communication.

In some embodiments, the transmission resource includes at least one first resource, and in a process of initiating one time of transmission resource sharing by the first device, first resource indication information sent to the second device indicates the first resource; or the transmission resource includes at least one second resource, and in a process of initiating one time of transmission resource sharing by the second device, second resource indication information from the second device indicates the second resource. In other words, the transmission resource used to determine whether the shared resource is sufficient may be indicated in one transmission resource sharing process or indicated in a plurality of transmission resource sharing processes, to implement reliable transmission of coordinated communication in different scenarios.

In some embodiments, the first radio frame carries fourth indication information, and the fourth indication information indicates that the transmission resource is a resource indicated when one time of transmission resource sharing is initiated, or the fourth indication information indicates that the transmission resource includes resources indicated during at least two times of transmission resource sharing. The fourth indication information is used to implement an indication of a single-time determining or accumulated determining.

In some embodiments, the second radio frame carries fourth indication information, and the fourth indication information carried in the second radio frame is used to set up the transmission agreement, for example, used to determine that the transmission resource is a resource indicated when one transmission resource sharing is initiated, or the transmission resource includes resources indicated when at least two times of transmission resource sharing are initiated, to complete negotiation of single-time determining or accumulated determining.

In some embodiments, the first radio frame carries fifth indication information, and the fifth indication information indicates at least one of the first threshold, the second threshold, the third threshold, the fourth threshold, and the fifth threshold, to implement an indication of a threshold.

In some embodiments, the second radio frame carries fifth indication information, and the fifth indication information carried in the second radio frame is used to set up the transmission agreement. For example, the fifth indication information carried in the second radio frame indicates at least one of the first threshold, the second threshold, the third threshold, the fourth threshold, and the fifth threshold, to complete threshold negotiation between the first device and the second device.

In some embodiments, the first radio frame carries sixth indication information, and the sixth indication information indicates at least one of the duration of the transmission resource, the bandwidth of the transmission resource, the time-frequency domain size of the transmission resource, the power of the transmission resource, and the quantity of bits carried by the transmission resource, to indicate a size of a transmission resource shared when transmission resource sharing is initiated.

In some embodiments, the second radio frame carries sixth indication information, and the sixth indication information carried in the second radio frame is used to set up the transmission agreement. For example, the sixth indication information carried in the second radio frame indicates at least one of the duration of the transmission resource, the bandwidth of the transmission resource, the time-frequency domain size of the transmission resource, the power of the transmission resource, and the quantity of bits carried by the transmission resource, to complete negotiation on a size of the transmission resource between the first device and the second device.

In some embodiments, initiating transmission resource sharing may include: The first device sends a fourth radio frame to the second device, where the fourth radio frame carries first resource indication information, and the first resource indication information indicates the first resource occupied by the second device when the second device performs communication according to the transmission agreement; or the first device receives a fourth radio frame from the second device, where the fourth radio frame carries second resource indication information, and the second resource indication information indicates the second resource occupied by the first device when the first device performs communication according to the transmission agreement.

To prevent a frame interaction sequence from being interrupted, a padding bit may be added to the fourth radio frame, to prolong a transmission time of the fourth radio frame, so that transmission can be performed after a short time after the fourth radio frame is received, to ensure continuity of the frame interaction sequence. For example, the fourth radio frame carries the first resource indication information and at least one bit, duration occupied by the at least one bit is greater than or equal to first duration, and the first duration is processing duration for performing communication by the first device according to the transmission agreement; or the fourth radio frame carries the second resource indication information and at least one bit, duration occupied by the at least one bit is greater than or equal to second duration, and the second duration is processing duration for performing communication by the second device according to the transmission agreement.

In some embodiments, the first device and the second device may notify the peer device of processing duration (that is, a processing delay) of the local device, so that when the peer device is used as a sharing device, the peer device adds sufficient padding bits when sending the fourth radio frame.

For example, the first radio frame carries seventh indication information, and the seventh indication information indicates duration for processing the fourth radio frame by the first device.

For example, when there are at least two coordination modes between the first device and the second device, the seventh indication information indicates processing duration respectively corresponding to the first device in the at least two coordination modes, to accurately indicate the processing duration.

For example, the second radio frame carries eighth indication information, and the eighth indication information indicates duration for processing the fourth radio frame by the second device.

For example, when there are at least two coordination modes between the first device and the second device, the eighth indication information indicates processing duration respectively corresponding to the second device in the at least two coordination modes, to accurately indicate the processing duration.

In some embodiments, the first radio frame carries ninth indication information, and the ninth indication information indicates an identifier of the transmission agreement, to determine, in a plurality of transmission agreements, a transmission agreement that is used or needs to be maintained (or managed).

According to a second aspect, an embodiment of this application provides a coordinated communication method. The method is performed by a first device or a component in the first device, for example, a chip, a chip system, or another functional module that can invoke and execute a program.

For example, the method includes: The first device sends a fifth radio frame to a second device, or the first device receives a fifth radio frame from a second device, where the fifth radio frame indicates to suspend a transmission agreement, and the first device and the second device share a transmission resource under the transmission agreement. The transmission agreement is maintained and managed by exchanging the fifth radio frame between the first device and the second device.

According to a third aspect, an embodiment of this application provides a coordinated communication method. The method is performed by a first device or a component in the first device, for example, a chip, a chip system, or another functional module that can invoke and execute a program.

For example, the method includes: The first device sends a sixth radio frame to a second device, or the first device receives a sixth radio frame from a second device, where the sixth radio frame indicates an enabled transmission agreement, and the first device and the second device share a transmission resource under the transmission agreement. The transmission agreement is maintained and managed by exchanging the sixth radio frame between the first device and the second device.

According to a fourth aspect, an embodiment of this application provides a coordinated communication method. The method is performed by a first device or a component in the first device, for example, a chip, a chip system, or another functional module that can invoke and execute a program.

For example, the method includes: The first device sends a seventh radio frame to a second device, or the first device receives a seventh radio frame from a second device, where the seventh radio frame is used to reconfigure a transmission agreement, and the first device and the second device share a transmission resource under the transmission agreement. The transmission agreement is maintained and managed by exchanging the seventh radio frame between the first device and the second device.

In some embodiments, the first device receives an eighth radio frame from the second device, or the first device sends an eighth radio frame to the second device, where the eighth radio frame is used to respond to reconfiguration of the transmission agreement, and the transmission agreement has been reconfigured.

According to a fifth aspect, an embodiment of this application provides a coordinated communication method. The method is performed by a first device or a component in the first device, for example, a chip, a chip system, or another functional module that can invoke and execute a program.

For example, the method includes: The first device sends a ninth radio frame to a second device, or the first device receives a ninth radio frame from a second device, where the ninth radio frame is used to delete a transmission agreement, and the first device and the second device share a transmission resource under the transmission agreement. The transmission agreement is maintained and managed by exchanging the ninth radio frame between the first device and the second device.

According to a sixth aspect, an embodiment of this application provides a coordinated communication method. The method is performed by a second device or a component in the second device, for example, a chip, a chip system, or another functional module that can invoke and execute a program.

For example, the method includes: The second device receives a first radio frame from a first device, where the first radio frame is used to request to set up a transmission agreement, and the first device and the second device share a transmission resource under the transmission agreement; and the second device sends a second radio frame to the first device, where the second radio frame is used to respond to a request for setting up the transmission agreement.

In a possible implementation, the first radio frame carries first indication information, and the first indication information indicates at least one coordination mode between the first device and the second device; and the second radio frame carries second indication information, and the second indication information indicates whether the at least one coordination mode is successfully set up.

In a possible implementation, the first indication information includes a first field, and a value of the first field indicates the at least one coordination mode; or the first indication information includes at least two second fields, each second field corresponds to one coordination mode, and a value of the second field indicates whether the corresponding coordination mode is a coordination mode between the first device and the second device.

In a possible implementation, the coordination mode includes at least one of co-TDMA, co-OFDMA, co-SR, or co-RTWT.

In a possible implementation, the first radio frame carries third indication information, the third indication information indicates valid duration of the transmission agreement, and in a first time constrained by the valid duration, the first device and the second device share a transmission resource.

In a possible implementation, the second radio frame carries the third indication information, and the third indication information carried in the second radio frame is used to set up the transmission agreement.

In a possible implementation, when transmission resource sharing fails to be initiated in the first time, the transmission agreement is suspended or ended.

In a possible implementation, the second device receives a third radio frame sent by the first device when the second device fails to initiate transmission resource sharing; or when the first device fails to initiate transmission resource sharing, the second device sends a third radio frame to the first device, where the third radio frame is used to suspend or end the transmission agreement.

In a possible implementation, a start moment of the first time is determined based on a time at which transmission resource sharing is successfully initiated for a last time.

In a possible implementation, in a case in which transmission resource sharing fails to be initiated after the transmission agreement is set up, the start moment of the first time is determined based on a time at which the transmission agreement is set up.

In a possible implementation, a transmission resource indicated by the first device when the first device initiates transmission resource sharing meets the following first condition, and/or a transmission resource indicated by the second device when the second device initiates transmission resource sharing meets the following first condition, and transmission resource sharing is successfully initiated; and the first condition includes at least one of the following:

Duration of the transmission resource is greater than or equal to a first threshold;
a bandwidth of the transmission resource is greater than or equal to a second threshold;
a time-frequency domain size of the transmission resource is greater than or equal to a third threshold, and the time-frequency domain size is a product of the duration and the bandwidth of the transmission resource;
a power of the transmission resource is greater than or equal to a fourth threshold; and
a quantity of bits carried by the transmission resource is greater than or equal to a fifth threshold.

In a possible implementation, the transmission resource includes at least one first resource, and in a process of initiating one time of transmission resource sharing by the first device, first resource indication information received by the second device from the first device indicates the first resource; or the transmission resource includes at least one second resource, and in a process of initiating one time of transmission resource sharing by the second device, second resource indication information sent by the second device to the first device indicates the second resource.

In a possible implementation, the first radio frame carries fourth indication information, and the fourth indication information indicates that the transmission resource is a resource indicated when one time of transmission resource sharing is initiated, or the fourth indication information indicates that the transmission resource includes resources indicated during at least two times of transmission resource sharing.

In a possible implementation, the second radio frame carries fourth indication information, and the fourth indication information carried in the second radio frame is used to set up the transmission agreement.

In a possible implementation, the first radio frame carries fifth indication information, and the fifth indication information indicates at least one of the first threshold, the second threshold, the third threshold, the fourth threshold, and the fifth threshold.

In a possible implementation, the second radio frame carries fifth indication information, and the fifth indication information carried in the second radio frame is used to set up the transmission agreement.

In a possible implementation, the first radio frame carries sixth indication information, and the sixth indication information indicates at least one of the duration of the transmission resource, the bandwidth of the transmission resource, the time-frequency domain size of the transmission resource, the power of the transmission resource, and the quantity of bits carried by the transmission resource.

In a possible implementation, the second radio frame carries sixth indication information, and the sixth indication information carried in the second radio frame is used to set up the transmission agreement.

In a possible implementation, the method further includes: The second device receives a fourth radio frame from the first device, where the fourth radio frame carries first resource indication information, and the first resource indication information indicates the first resource occupied by the second device when the second device performs communication according to the transmission agreement; or the second device sends a fourth radio frame to the first device, where the fourth radio frame carries second resource indication information, and the second resource indication information indicates the second resource occupied by the first device when the first device performs communication according to the transmission agreement.

In a possible implementation, the fourth radio frame carries the first resource indication information and at least one bit, duration occupied by the at least one bit is greater than or equal to first duration, and the first duration is processing duration for performing communication by the first device according to the transmission agreement; or the fourth radio frame carries the second resource indication information and at least one bit, duration occupied by the at least one bit is greater than or equal to second duration, and the second duration is processing duration for performing communication by the second device according to the transmission agreement.

In a possible implementation, the first radio frame carries seventh indication information, and the seventh indication information indicates duration for processing the fourth radio frame by the first device.

In a possible implementation, when there are at least two coordination modes between the first device and the second device, the seventh indication information indicates processing duration respectively corresponding to the first device in the at least two coordination modes.

In a possible implementation, the second radio frame carries eighth indication information, and the eighth indication information indicates duration for processing the fourth radio frame by the second device.

In a possible implementation, when there are at least two coordination modes between the first device and the second device, the eighth indication information indicates processing duration respectively corresponding to the second device in the at least two coordination modes.

In a possible implementation, the second radio frame carries ninth indication information, and the ninth indication information carried in the second radio frame is used to set up the transmission agreement.

According to a seventh aspect, an embodiment of this application provides a coordinated communication method. The method is performed by a second device or a component in the second device, for example, a chip, a chip system, or another functional module that can invoke and execute a program.

For example, the method includes: The second device receives a fifth radio frame from a first device, or sends a fifth radio frame to a first device, where the fifth radio frame indicates to suspend a transmission agreement.

According to an eighth aspect, an embodiment of this application provides a coordinated communication method. The method is performed by a second device or a component in the second device, for example, a chip, a chip system, or another functional module that can invoke and execute a program.

For example, the method includes: The second device receives a sixth radio frame from a first device, or the second device sends a sixth radio frame to a first device, where the sixth radio frame indicates an enabled transmission agreement.

According to a ninth aspect, an embodiment of this application provides a coordinated communication method. The method is performed by a second device or a component in the second device, for example, a chip, a chip system, or another functional module that can invoke and execute a program.

For example, the method includes: The second device receives a seventh radio frame from a first device, or the second device sends a seventh radio frame to a first device, where the seventh radio frame is used to reconfigure a transmission agreement.

In a possible implementation, the second device sends an eighth radio frame to the first device, or the second device receives an eighth radio frame sent by the first device, where the eighth radio frame is used to respond to reconfiguration of the transmission agreement.

According to a tenth aspect, an embodiment of this application provides a coordinated communication method. The method is performed by a second device or a component in the second device, for example, a chip, a chip system, or another functional module that can invoke and execute a program.

For example, the method includes: The second device receives a ninth radio frame sent by a first device, or the second device sends a ninth radio frame to a first device, where the ninth radio frame is used to delete a transmission agreement.

According to an eleventh aspect, an embodiment of this application provides a communication apparatus, including: a transceiver module, configured to send a first radio frame to a second device, where the first radio frame is used to request to set up a transmission agreement, and the communication apparatus and the second device share a transmission resource under the transmission agreement. The transceiver module is further configured to receive a second radio frame from the second device, where the second radio frame is used to respond to a request for setting up the transmission agreement.

In a possible implementation, the first radio frame carries first indication information, and the first indication information indicates at least one coordination mode between the communication apparatus and the second device; and the second radio frame carries second indication information, and the second indication information indicates whether the at least one coordination mode is successfully set up.

In a possible implementation, the first indication information includes a first field, and a value of the first field indicates the at least one coordination mode; or the first indication information includes at least two second fields, each second field corresponds to one coordination mode, and a value of the second field indicates whether the corresponding coordination mode is a coordination mode between the communication apparatus and the second device.

In a possible implementation, the coordination mode includes at least one of co-TDMA, co-OFDMA, co-SR, and co-RTWT.

In a possible implementation, the first radio frame carries third indication information, the third indication information indicates valid duration of the transmission agreement, and in a first time constrained by the valid duration, the communication apparatus and the second device share a transmission resource.

In a possible implementation, the second radio frame carries third indication information, and the third indication information carried in the second radio frame is used to set up the transmission agreement.

In a possible implementation, when transmission resource sharing fails to be initiated in the first time, the transmission agreement is suspended or ended.

In a possible implementation, when the second device fails to initiate transmission resource sharing, the transceiver module is further configured to send a third radio frame to the second device; or the transceiver module is further configured to receive a third radio frame sent by the second device when the communication apparatus fails to initiate transmission resource sharing, where the third radio frame is used to suspend or end the transmission agreement.

In a possible implementation, a start moment of the first time is determined based on a time at which transmission resource sharing is successfully initiated for a last time.

In a possible implementation, in a case in which transmission resource sharing fails to be initiated after the transmission agreement is set up, the start moment of the first time is determined based on a time at which the transmission agreement is set up.

In a possible implementation, a transmission resource indicated by the communication apparatus when the communication apparatus initiates transmission resource sharing meets the following first condition, and/or a transmission resource indicated by the second device when the second device initiates transmission resource sharing meets the following first condition, and transmission resource sharing is successfully initiated; and the first condition includes at least one of the following: Duration of the transmission resource is greater than or equal to a first threshold; a bandwidth of the transmission resource is greater than or equal to a second threshold; a time-frequency domain size of the transmission resource is greater than or equal to a third threshold, and the time-frequency domain size is a product of the duration and the bandwidth of the transmission resource; a power of the transmission resource is greater than or equal to a fourth threshold; and a quantity of bits carried by the transmission resource is greater than or equal to a fifth threshold.

In a possible implementation, the transmission resource includes at least one first resource, and in a process of initiating one time of transmission resource sharing by communication apparatus, first resource indication information sent to the second device indicates the first resource; or the transmission resource includes at least one second resource, and in a process of initiating one time of transmission resource sharing by the second device, second resource indication information from the second device indicates the second resource.

In a possible implementation, the first radio frame carries fourth indication information, and the fourth indication information indicates that the transmission resource is a resource indicated when one time of transmission resource sharing is initiated, or the fourth indication information indicates that the transmission resource includes resources indicated during at least two times of transmission resource sharing.

In a possible implementation, the second radio frame carries fourth indication information, and the fourth indication information carried in the second radio frame is used to set up the transmission agreement.

In a possible implementation, the first radio frame carries fifth indication information, and the fifth indication information indicates at least one of the first threshold, the second threshold, the third threshold, the fourth threshold, and the fifth threshold.

In a possible implementation, the second radio frame carries fifth indication information, and the fifth indication information carried in the second radio frame is used to set up the transmission agreement.

In a possible implementation, the first radio frame carries sixth indication information, and the sixth indication information indicates at least one of the duration of the transmission resource, the bandwidth of the transmission resource, the time-frequency domain size of the transmission resource, the power of the transmission resource, and the quantity of bits carried by the transmission resource.

In a possible implementation, the second radio frame carries sixth indication information, and the sixth indication information carried in the second radio frame is used to set up the transmission agreement.

In a possible implementation, the transceiver module is further configured to send a fourth radio frame to the second device, where the fourth radio frame carries the first resource indication information, and the first resource indication information indicates the first resource occupied by the second device when the second device performs communication according to the transmission agreement; or the transceiver module is further configured to receive a fourth radio frame from the second device, where the fourth radio frame carries the second resource indication information, and the second resource indication information indicates the second resource occupied by the communication apparatus when the communication apparatus performs communication according to the transmission agreement.

In a possible implementation, the fourth radio frame carries the first resource indication information and at least one bit, duration occupied by the at least one bit is greater than or equal to first duration, and the first duration is processing duration for performing communication by the communication apparatus according to the transmission agreement; or the fourth radio frame carries the second resource indication information and at least one bit, duration occupied by the at least one bit is greater than or equal to second duration, and the second duration is processing duration for performing communication by the second device according to the transmission agreement.

In a possible implementation, the first radio frame carries seventh indication information, and the seventh indication information indicates duration for processing the fourth radio frame by the communication apparatus.

In a possible implementation, when there are at least two coordination modes between the communication apparatus and the second device, the seventh indication information indicates processing duration respectively corresponding to the communication apparatus in the at least two coordination modes.

In a possible implementation, the second radio frame carries eighth indication information, and the eighth indication information indicates duration for processing the fourth radio frame by the second device.

In a possible implementation, when there are at least two coordination modes between the communication apparatus and the second device, the eighth indication information indicates processing duration respectively corresponding to the second device in the at least two coordination modes.

In a possible implementation, the first radio frame carries ninth indication information, and the ninth indication information indicates an identifier of the transmission agreement.

In a possible implementation, the second radio frame carries ninth indication information, and the ninth indication information carried in the second radio frame is used to set up the transmission agreement.

According to a twelfth aspect, an embodiment of this application provides a communication apparatus, including: a transceiver module, configured to send a fifth radio frame to a second device, or configured to receive a fifth radio frame from a second device, where the fifth radio frame indicates to suspend a transmission agreement.

According to a thirteenth aspect, an embodiment of this application provides a communication apparatus, including: a transceiver module, configured to send a sixth radio frame to a second device, or configured to receive a sixth radio frame from a second device, where the sixth radio frame indicates an enabled transmission agreement.

According to a fourteenth aspect, an embodiment of this application provides a communication apparatus, including: a transceiver module, configured to send a seventh radio frame to a second device, or configured to receive a seventh radio frame from a second device, where the seventh radio frame is used to reconfigure a transmission agreement.

According to a fifteenth aspect, an embodiment of this application provides a communication apparatus, including: a transceiver module, configured to receive an eighth radio frame from a second device, or configured to send an eighth radio frame to a second device, where the eighth radio frame is used to respond to reconfiguration of a transmission agreement.

According to a sixteenth aspect, an embodiment of this application provides a communication apparatus, including: a transceiver module, configured to send a ninth radio frame to a second device, or configured to receive a ninth radio frame from a second device, where the ninth radio frame is used to delete a transmission agreement.

According to a seventeenth aspect, an embodiment of this application provides a communication apparatus, including: a transceiver module, configured to: receive a first radio frame from a first device, where the first radio frame is used to request to set up a transmission agreement, and the first device and the communication apparatus share a transmission resource under the transmission agreement; and send a second radio frame to the first device, where the second radio frame is used to respond to a request for setting up the transmission agreement.

In a possible implementation, the first radio frame carries first indication information, and the first indication information indicates at least one coordination mode between the first device and the communication apparatus; and the second radio frame carries second indication information, and the second indication information indicates whether the at least one coordination mode is successfully set up.

In a possible implementation, the first indication information includes a first field, and a value of the first field indicates the at least one coordination mode; or the first indication information includes at least two second fields, each second field corresponds to one coordination mode, and a value of the second field indicates whether the corresponding coordination mode is a coordination mode between the first device and the communication apparatus.

In a possible implementation, the coordination mode includes at least one of co-TDMA, co-OFDMA, co-SR, or co-RTWT.

In a possible implementation, the first radio frame carries third indication information, the third indication information indicates valid duration of the transmission agreement, and in a first time constrained by the valid duration, the first device and the communication apparatus share a transmission resource.

In a possible implementation, the second radio frame carries third indication information, and the third indication information carried in the second radio frame is used to set up the transmission agreement.

In a possible implementation, when transmission resource sharing fails to be initiated in the first time, the transmission agreement is suspended or ended.

In a possible implementation, a third radio frame sent by the first device when the communication apparatus fails to initiate transmission resource sharing is received; or when the first device fails to initiate transmission resource sharing, the transceiver module is further configured to send a third radio frame to the first device, where the third radio frame is used to suspend or end the transmission agreement.

In a possible implementation, a start moment of the first time is determined based on a time at which transmission resource sharing is successfully initiated for a last time.

In a possible implementation, in a case in which transmission resource sharing fails to be initiated after the transmission agreement is set up, the start moment of the first time is determined based on a time at which the transmission agreement is set up.

In a possible implementation, a transmission resource indicated by the first device when the first device initiates transmission resource sharing meets the following first condition, and/or a transmission resource indicated by the communication apparatus when the communication apparatus initiates transmission resource sharing meets the following first condition, and transmission resource sharing is successfully initiated; and the first condition includes at least one of the following: Duration of the transmission resource is greater than or equal to a first threshold; a bandwidth of the transmission resource is greater than or equal to a second threshold; a time-frequency domain size of the transmission resource is greater than or equal to a third threshold, and the time-frequency domain size is a product of the duration and the bandwidth of the transmission resource; a power of the transmission resource is greater than or equal to a fourth threshold; and a quantity of bits carried by the transmission resource is greater than or equal to a fifth threshold.

In a possible implementation, the transmission resource includes at least one first resource, and in a process of initiating one time of transmission resource sharing by the first device, first resource indication information received by the transceiver module from the first device indicates the first resource; or the transmission resource includes at least one second resource, and in a process of initiating one time of transmission resource sharing by the communication apparatus, second resource indication information sent by the transceiver module to the first device indicates the second resource.

In a possible implementation, the first radio frame carries fourth indication information, and the fourth indication information indicates that the transmission resource is a resource indicated when one time of transmission resource sharing is initiated, or the fourth indication information indicates that the transmission resource includes resources indicated during at least two times of transmission resource sharing.

In a possible implementation, the second radio frame carries fourth indication information, and the fourth indication information carried in the second radio frame is used to set up the transmission agreement.

In a possible implementation, the first radio frame carries fifth indication information, and the fifth indication information indicates at least one of the first threshold, the second threshold, the third threshold, the fourth threshold, and the fifth threshold.

In a possible implementation, the second radio frame carries fifth indication information, and the fifth indication information carried in the second radio frame is used to set up the transmission agreement.

In a possible implementation, the first radio frame carries sixth indication information, and the sixth indication information indicates at least one of the duration of the transmission resource, the bandwidth of the transmission resource, the time-frequency domain size of the transmission resource, the power of the transmission resource, and the quantity of bits carried by the transmission resource.

In a possible implementation, the second radio frame carries sixth indication information, and the sixth indication information carried in the second radio frame is used to set up the transmission agreement.

In a possible implementation, the transceiver module is further configured to receive a fourth radio frame from the first device, where the fourth radio frame carries the first resource indication information, and the first resource indication information indicates the first resource occupied by the communication apparatus when the communication apparatus performs communication according to the transmission agreement; or the transceiver module is further configured to send a fourth radio frame to the first device, where the fourth radio frame carries the second resource indication information, and the second resource indication information indicates the second resource occupied by the first device when the first device performs communication according to the transmission agreement.

In a possible implementation, the fourth radio frame carries the first resource indication information and at least one bit, duration occupied by the at least one bit is greater than or equal to first duration, and the first duration is processing duration for performing communication by the first device according to the transmission agreement; or the fourth radio frame carries the second resource indication information and at least one bit, duration occupied by the at least one bit is greater than or equal to second duration, and the second duration is processing duration for performing communication by the communication apparatus according to the transmission agreement.

In a possible implementation, the first radio frame carries seventh indication information, and the seventh indication information indicates duration for processing the fourth radio frame by the first device.

In a possible implementation, when there are at least two coordination modes between the first device and the communication apparatus, the seventh indication information indicates processing duration respectively corresponding to the first device in the at least two coordination modes.

In a possible implementation, the second radio frame carries eighth indication information, and the eighth indication information indicates duration for processing the fourth radio frame by the communication apparatus.

In a possible implementation, when there are at least two coordination modes between the first device and the communication apparatus, the eighth indication information indicates processing duration respectively corresponding to the communication apparatus in the at least two coordination modes.

In a possible implementation, the first radio frame carries ninth indication information, and the ninth indication information indicates an identifier of the transmission agreement.

In a possible implementation, the second radio frame carries ninth indication information, and the ninth indication information carried in the second radio frame is used to set up the transmission agreement.

According to an eighteenth aspect, an embodiment of this application provides a communication apparatus, including: a transceiver module, configured to receive a fifth radio frame from a first device, or configured to send a fifth radio frame to a first device, where the fifth radio frame indicates to suspend a transmission agreement.

According to a nineteenth aspect, an embodiment of this application provides a communication apparatus, including: a transceiver module, configured to receive a sixth radio frame from a first device, or configured to send a sixth radio frame to a first device, where the sixth radio frame indicates an enabled transmission agreement.

According to a twentieth aspect, an embodiment of this application provides a communication apparatus, including: a transceiver module, configured to receive a seventh radio frame from a first device, or configured to send a seventh radio frame to a first device, where the seventh radio frame is used to reconfigure a transmission agreement.

In a possible implementation, the transceiver module is further configured to send an eighth radio frame to the first device, or configured to receive an eighth radio frame sent by the first device, where the eighth radio frame is used to respond to reconfiguration of the transmission agreement.

According to a twenty-first aspect, an embodiment of this application provides a communication apparatus, including: a transceiver module, configured to receive a ninth radio frame sent by the first device, or configured to send a ninth radio frame to a first device, where the ninth radio frame is used to delete a transmission agreement.

According to a twenty-second aspect, an embodiment of this application provides a communication apparatus, including a processor. The processor performs the method according to the first aspect to the tenth aspect or the possible implementations by running a computer program or by using a logic circuit.

In a possible implementation, the communication apparatus further includes a memory, and the memory is configured to store a computer program.

According to a twenty-third aspect, an embodiment of this application provides a communication system, including a first device configured to perform the method according to the first aspect to the fifth aspect or the possible implementations, and a second device configured to perform the method according to the sixth aspect to the tenth aspect or the possible implementations.

According to a twenty-fourth aspect, an embodiment of this application provides a chip, including a processor, configured to: invoke computer instructions from a memory and run the computer instructions, so that a device to which the chip is mounted performs the method according to the first aspect to the tenth aspect or the possible implementations.

According to a twenty-fifth aspect, an embodiment of this application provides a computer-readable storage medium, configured to store computer program instructions. The computer program enables a computer to perform the method according to the first aspect to the tenth aspect or the possible implementations.

According to a twenty-sixth aspect, an embodiment of this application provides a computer program product, including computer program instructions. The computer program instructions enable a computer to perform the method according to the first aspect to the tenth aspect or the possible implementations.

For beneficial effects of the technical solutions provided in the sixth aspect to the twenty-sixth aspect and the possible implementations, refer to the beneficial effects brought by the first aspect to the tenth aspect and the possible implementations. Details are not described herein again.

### BRIEF DESCRIPTION OF DRAWINGS

FIG. 1 is a diagram of a communication system applicable to a transmission method according to an embodiment of this application;
FIG. 2 is a schematic interaction flowchart of a coordinated communication method according to an embodiment of this application;
FIG. 3a is a schematic interaction flowchart of a coordinated communication method according to an embodiment of this application;
FIG. 3b is a schematic interaction flowchart of a coordinated communication method according to an embodiment of this application;
FIG. 4 is a block diagram of a communication apparatus according to an embodiment of this application; and
FIG. 5 is another block diagram of a communication apparatus according to an embodiment of this application.

### DESCRIPTION OF EMBODIMENTS

The following describes technical solutions of this application with reference to accompanying drawings.

Embodiments of this application provide a communication method applied to a wireless communication system, so that a plurality of devices can share a time resource to perform coordinated transmission. The wireless communication system may be a WLAN or a cellular network. The method may be implemented by a communication device in the wireless communication system or a chip or a processor in the communication device. The communication device may be a wireless communication device in multi-device coordination. For example, the communication device may be an access point (Access Point, AP) device, or may be a station (station, STA) device. For example, the communication device may alternatively be a multi-link device (multi-link device, MLD).

In embodiments of this application, a first device and a second device may be understood as devices for coordinated transmission. For example, both the first device and the second device may be AP devices; both the first device and the second device may be STA devices; the first device may be an AP device, and the second device may be a STA device; or the first device may be a STA device, and the second device may be an AP device.

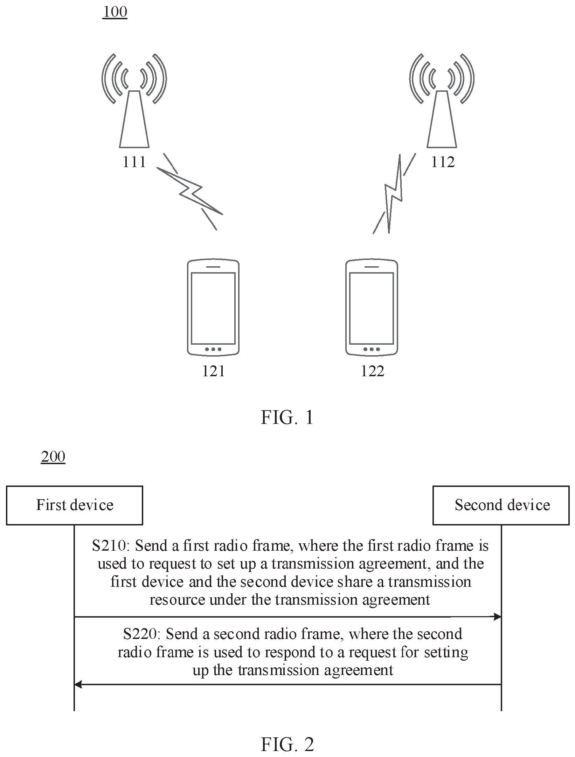

For ease of understanding embodiments of this application, a communication system applicable to embodiments of this application is first described in detail with reference to FIG. 1.

FIG. 1 is a diagram of a wireless communication system 100 applicable to an embodiment of this application. As shown in FIG. 1, technical solutions in embodiments of this application may be applied to a wireless local area network. The wireless communication system 100 may include at least two access point devices, for example, an AP 111 and an AP 112 shown in FIG. 1. The wireless communication system 100 may further include at least two station devices, for example, a STA 121 and a STA 122 shown in FIG. 1. For example, the AP may be a multi-link AP, or the STA may be a multi-link STA.

One or more STAs in the station devices may communicate with one or more APs in the access point devices after an association relationship is set up. For example, the AP 111 may communicate with the STA 121. For example, the AP 111 communicates with the STA 121 after an association relationship is set up. The AP 112 may communicate with the STA 122. For example, the AP 112 communicates with the STA 122 after an association relationship is set up.

In embodiments of this application, a first device and a second device may be, for example, access point devices. For example, the first device may include the AP 111, and the second device may include the AP 112. Alternatively, the first device and the second device may be, for example, station devices. For example, the first device may include the STA 121, and the second device may include the STA 122. Alternatively, the first device may be an access point device, for example, including the AP 111, and the second device may be a station device, for example, including the STA 121. Alternatively, the first device may be a station device, for example, including the STA 121, and the second device may be an access point device, for example, including the AP 111.

It should be understood that the communication system applicable to this application shown with reference to FIG. 1 is merely an example for description, and the communication system applicable to this application is not limited thereto. For example, the communication system may include more APs. For another example, the communication system may further include more STAs. For another example, embodiments of this application may be applied to a multi-device coordination scenario, for example, a multi-AP (multiple access points, Multi-AP) coordination scenario or a multi-station coordination scenario.

The AP device in embodiments of this application may be a device in a wireless network. The AP device may be a communication entity like a communication server, a router, a switch, or a bridge, or the AP device may include a macro base station, a micro base station, a relay station, or the like in various forms. Certainly, the AP may alternatively be a chip, a circuit, or a processing system in the devices in various forms, to implement the methods and the functions in embodiments of this application. The AP device may be used in many scenarios, for example, a sensor node (for example, a smart water meter, a smart electricity meter, and a smart air detection node) in a smart city, a smart device (for example, a smart camera, a projector, a display, a television, a speaker, a refrigerator, and a washing machine) in a smart home, a node in an internet of things, an entertainment terminal (for example, a wearable device like an AR device or a VR device), a smart device (for example, a printer or a projector) in a smart office, an internet of vehicles device in an internet of vehicles, and some infrastructures (for example, a vending machine, a self-service navigation console in a supermarket, a self-service cash register, and a self-service ordering machine) in a daily life scenario.

The STA device in embodiments of this application may be a device having a wireless transceiver function, for example, may be a device that supports 802.11 series protocols and may communicate with an AP or another STA. For example, the STA is any user communication device that allows a user to communicate with an AP to communicate with a WLAN. The STA device is, for example, user equipment (user equipment, UE), a mobile station (mobile station, MS), a mobile terminal (mobile terminal, MT), an access terminal, a subscriber unit, a subscriber station, a mobile console, a mobile station, a remote station, a remote terminal, a mobile device, a user terminal, a terminal, a wireless communication device, a user agent, or a user apparatus.

The STA in embodiments of this application may alternatively be a device that provides a user with voice/data connectivity, for example, a handheld device or vehicle-mounted device having a wireless connection function. The STA is, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function or another processing device connected to a wireless modem, a vehicle-mounted device, a wearable device, a terminal device in a 5G network, or a terminal device in a future evolved public land mobile network (public land mobile network, PLMN). This is not limited in embodiments of this application.

By way of example, but not limitation, in embodiments of this application, the STA device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. For example, smart watches or smart glasses, and devices that focus on only one type of application function need to work with other devices such as smartphones, such as various smart bands or smart jewelry for monitoring physical signs.

In addition, the STA device in embodiments of this application may alternatively be a terminal device in an internet of things (Internet of Things, IoT) system. IoT is an important part of future development of information technologies. A main technical feature of the IoT is connecting a thing to a network by using a communication technology, to implement an intelligent network for interconnection between a person and a machine or between things. In embodiments of this application, IoT technologies can achieve massive connections, deep coverage, and terminal power saving by using, for example, a narrow band (narrow band) NB technology.

In addition, in embodiments of this application, the STA device may be a device in an internet of vehicles system. Communication modes in the internet of vehicles system are collectively referred to as V2X (X indicates everything). For example, V2X communication includes vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

In addition, in embodiments of this application, the STA device may further include a sensor in, for example, an intelligent printer, a train detector, or a gas station. Main functions of the STA device include collecting data (by some terminal devices), receiving control information and downlink data from an AP device, sending an electromagnetic wave, and transmitting data to an AP device.

In addition, the AP device in embodiments of this application may be a device configured to communicate with a STA device. The AP device may be a network device in a wireless local area network, and the AP device may be configured to communicate with the STA device through the wireless local area network.

It should be understood that specific forms of the STA device and the AP device are not specially limited in embodiments of this application, and are merely examples for description herein.

In embodiments of this application, a specific structure of an execution entity of the method provided in embodiments of this application is not specifically limited, provided that a program that records code of the method provided in embodiments of this application can be run to perform communication according to the method provided in embodiments of this application. For example, the method provided in embodiments of this application may be performed by a device (an AP device or a STA device), or a functional module that is in the device (the AP device or the STA device) and that can invoke and execute the program.

In addition, the computer-readable medium in embodiments of this application may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

The plurality of APs may include but are not limited to the following coordination modes.

### 1. Coordinated time division multiple access (coordinated time division multiple access, co-TDMA)

When an AP performs data transmission after obtaining a transmission opportunity (transmission opportunity, TXOP), if the AP fails to fully use the transmission opportunity, remaining time in the transmission opportunity may be allocated to another AP for transmission, so that the another AP can quickly perform transmission, thereby reducing a communication delay.

### 2. Coordinated orthogonal frequency division multiple access co-(orthogonal frequency division multiple access, OFDMA)

Orthogonal frequency division multiplexing (orthogonal frequency division multiplexing, OFDM) is a basic transmission manner of current wireless communication, and is widely applied to wireless communication systems such as long term evolution (Long Term Evolution, LTE), worldwide interoperability for microwave access (worldwide interoperability for microwave access, WiMAX), and Wi-Fi. In addition, OFDM is further applied to fixed network transmission, for example, in transmission manners such as fiber, copper stranded wire, and cable. A basic principle of OFDM is as follows: A subcarrier spacing is maximally compressed in an allowable range of subcarrier orthogonality. This can ensure that a plurality of parallel paths that do not interfere with each other are formed. In addition, this can improve frequency utilization efficiency of a system.

Further, because OFDM has the foregoing characteristics, if subcarriers of OFDM that do not interfere with each other are allocated to a plurality of users, access or data transmission of the plurality of users can be implemented by using OFDM. This is OFDMA. OFDMA can be used for parallel transmission of multi-user data, and is an effective way to improve data transmission concurrency.

In co-OFDMA, when a traffic volume of an AP is low, that is, when there is no need to use all channel bandwidths for transmission, the AP may perform transmission together with another AP, and transmission of the APs is staggered on different channels or resource blocks in an OFDMA manner, so that channel resources are effectively utilized.

### 3. Coordinated spatial reuse co-(spatial reuse, SR)

When a distance between two APs is large, the two APs may perform simultaneous transmission on a same channel/resource block, and low interference between the two APs is ensured through power control and user selection, to effectively utilize channel resources.

### 4. Coordinated restricted target wake time co-(restricted target wake time, RTWT)

RTWT is a target wake time with enhanced media access protection and reserved resources for delay-sensitive services. When a STA is configured with an RTWT service period (service period, SP), the STA may enter a wake (wake) mode from a sleep mode (sleep mode) when the RTWT SP arrives, and send and/or receive data in the RTWT SP. A STA other than the STA avoids or does not preempt (that is, occupy) the RTWT SP. Finally, the STA returns to the sleep mode when the RTWT SP ends.

In co-RTWT, when two APs are close to each other, the two APs may set up a time-staggered RTWT agreement, and a station in one cell ends transmission when an RTWT SP of another cell arrives, to reduce impact on low-delay transmission in the two cells. Alternatively, when two APs are far away from each other, the two APs may set up a time-overlapped RTWT agreement, and reduce a transmit power, so that stations in the two cells perform concurrent transmission at the same time.

It should be understood that this application is described only by using multi-AP coordinated transmission as an example, but this is not limited. For example, multi-STA coordinated transmission, coordinated transmission between an AP and a STA, and the like may be further included. For ease of description, this is collectively referred to as multi-device coordinated transmission below.

In view of the foregoing coordination mode, during multi-device coordinated transmission, a plurality of devices may share a transmission resource. For example, in co-TDMA, a plurality of devices share a time resource, in co-OFDMA, a plurality of devices may share a frequency resource, in co-SR, a plurality of devices may share a space resource, and in co-RTWT, a plurality of devices may share a time resource in a manner of avoiding interference.

Generally, a device that initiates multi-device coordinated transmission, for example, a device that initiates resource sharing to implement coordinated transmission, may be referred to as a sharing device, for example, a sharing AP (sharing AP). Another device with which a transmission resource or a transmission opportunity is shared may be referred to as a shared device, for example, a shared AP (shared AP). In this embodiment of this application, a first device may be a sharing device, and a second device may be a shared device; or a first device may be a shared device, and a second device may be a sharing device. This is not limited in this application.

To implement multi-device coordinated transmission, in this application, a transmission agreement is set up, that is, negotiated between the first device and the second device by using a radio frame transmitted between the first device and the second device, so that the first device and the second device share a transmission resource under the transmission agreement, to provide a basis for implementing multi-device coordinated transmission.

The following describes in detail the coordinated communication method provided in embodiments of this application with reference to the accompanying drawings.

It should be understood that, for ease of understanding and description, the following describes in detail the method provided in embodiments of this application by using interaction between the first device and the second device as an example.

However, it should be understood that this shall not constitute any limitation on an execution body of the method provided in this application. Any device may serve as the execution entity of the method provided in embodiments of this application provided that a program that records code of the method provided in embodiments of this application can be run according to the method provided in embodiments of this application. For example, the first device shown in the following embodiments may alternatively be replaced with a component, for example, a chip, a chip system, or another functional module that can invoke a program and execute the program, in the first device. The second device may alternatively be replaced with a component, for example, a chip, a chip system, or another functional module that can invoke a program and execute the program, in the second device.

It should be noted that, the terms "first", "second", and various numbers in the following embodiments are only used for differentiation for ease of description, but are not used to limit the scope of embodiments of this application. For example, different radio frames, different indication information, different fields, and different resources are distinguished.

FIG. 2 is a schematic interaction flowchart of a coordinated communication method 200 according to an embodiment of this application. As shown in FIG. 2, the method 200 may include the following steps.

S210: A first device sends a first radio frame to a second device, where the first radio frame is used to request to set up a transmission agreement, and the first device and the second device share a transmission resource under the transmission agreement. Correspondingly, the second device receives the first radio frame from the first device.

S220: The second device sends a second radio frame to the first device, where the second radio frame is used to respond to a request for setting up the transmission agreement. Correspondingly, the first device receives the second radio frame from the second device.

In a process of setting up the transmission agreement, the first device and the second device may negotiate a transmission parameter based on the first radio frame and the second radio frame.

In a first example, the first radio frame sent by the first device to the second device carries a recommended value of the transmission parameter, and the second radio frame sent by the second device to the first device carries a final value of the transmission parameter. It should be understood that the final value of the transmission parameter carried in the second radio frame may be the same as, partially the same as, or completely different from the recommended value of the transmission parameter carried in the first radio frame. A part in which the final value is different from the recommended value is subject to the final value.

In a second example, the first radio frame sent by the first device to the second device carries a value of the transmission parameter, and the second radio frame sent by the second device to the first device carries information indicating whether the transmission agreement is successfully set up. For example, when a value of a corresponding field in the second radio frame is 0, it indicates that the transmission agreement is successfully set up; and when the value of the corresponding field in the second radio frame is 1, it indicates that the transmission agreement fails to be set up. It should be understood that a value of the field indicating whether the transmission agreement is successfully set up is not limited in this application. For example, when the value is 0, it indicates that the transmission agreement is successfully set up; and when the value is any non-zero value, it indicates that the transmission agreement fails to be set up. For another example, when the value is 1, it indicates that the transmission agreement is successfully set up; and when the value is 0, it indicates that the transmission agreement fails to be set up.

In the second example, when the information carried in the second radio frame indicates that the transmission agreement is successfully set up, it indicates that the value of the transmission parameter carried in the first radio frame is agreed. When the information carried in the second radio frame indicates that the transmission agreement fails to be set up, it indicates that at least a part of the value of the transmission parameter carried in the first radio frame is not agreed.

Optionally, when the information carried in the second radio frame indicates that the transmission agreement fails to be set up, the information may specifically indicate a transmission parameter that is not agreed and/or a transmission parameter that is agreed. Optionally, when the information carried in the second radio frame indicates that the transmission agreement fails to be set up, a value of a transmission parameter that is not agreed may be further carried.

Optionally, the information carried in the second radio frame and indicating whether the transmission agreement is successfully set up may be information indicating, by each transmission parameter, whether the transmission agreement is successfully set up. For example, the second radio frame in the following carries second indication information, and the second indication information indicates whether at least one coordination mode is successfully set up.

In a third example, the first radio frame sent by the first device to the second device does not carry a value of the transmission parameter, and the second radio frame sent by the second device to the first device carries a final value of the transmission parameter.

In a fourth example, the first radio frame sent by the first device to the second device carries a value of the transmission parameter, and the second radio frame sent by the second device to the first device carries a value of the transmission parameter. The value of the transmission parameter carried in the second radio frame may be a recommended value.

When the transmission agreement is successfully set up, the value of the transmission parameter carried in the second radio frame is the same as the value of the transmission parameter carried in the first radio frame. When the agreement fails to be set up, the value of the transmission parameter carried in the second radio frame is different from the value of the transmission parameter carried in the first radio frame.

In the fourth example, whether the transmission agreement is successfully set up may be determined based on the information carried in the second radio frame and indicating whether the transmission agreement is successfully set up.

The transmission parameter may be indicated based on indication information, for example, first indication information, and third indication information to ninth indication information below.

When the transmission parameter includes a coordination mode, in the first example, the second example, and the fourth example, the first radio frame may carry the first indication information, and the first indication information indicates at least one coordination mode between the first device and the second device.

In the first example, the third example, and the fourth example, the second radio frame may carry the first indication information.

In the first example, a value of the first indication information carried in the second radio frame may be the same as or different from a value of the first indication information carried in the first radio frame. When the value of the first indication information carried in the second radio frame is the same as the value of the first indication information carried in the first radio frame, it indicates that the second device agrees with a coordination mode requested by the first device. When the value of the first indication information carried in the second radio frame is different from the value of the first indication information carried in the first radio frame, the transmission agreement is set up based on the first indication information carried in the second radio frame, that is, the transmission agreement uses the at least one coordination mode indicated by the first indication information carried in the second radio frame.

In the fourth example, a value of the first indication information carried in the second radio frame may be the same as or different from a value of the first indication information carried in the first radio frame. When the transmission agreement is successfully set up, the value of the first indication information carried in the second radio frame is the same as the value of the first indication information carried in the first radio frame. When the transmission agreement fails to be set up, the value of the first indication information carried in the second radio frame may be different from the value of the first indication information carried in the first radio frame. The third indication information to the ninth indication information in the following are similar to this, and details are not described again for brevity.

In the second example, the second radio frame may carry the second indication information, and the second indication information indicates whether the at least one coordination mode is successfully set up. Alternatively, the second radio frame may carry the information indicating whether the transmission agreement is successfully set up. When the information in the second radio frame indicates that the transmission agreement is successfully set up, the at least one coordination mode is successfully set up. When the information in the second radio frame indicates that the transmission agreement fails to be set up, the at least one coordination mode fails to be set up.

Optionally, the coordination mode may include at least one of the foregoing co-TDMA, co-OFDMA, co-SR, or co-RTWT.

For example, the first indication information may include a first field, and a value of the first field may indicate at least one coordination mode. Optionally, the first field may include a bitmap, each bit in the bitmap corresponds to one coordination mode, and when a bit in the bitmap is a first value, it indicates that a coordination mode corresponding to the bit is a coordination mode between the first device and the second device; or when a bit in the bitmap is a second value, it indicates that a coordination mode corresponding to the bit is not a coordination mode between the first device and the second device. The first value and the second value are not limited in this application. For example, the first value may be 1, and the second value may be 0; or the first value may be 0, and the second value may be 1. For example, a 1^{st} bit to a 4^{th} bit in the bitmap respectively correspond to co-TDMA, co-OFDMA, co-SR, and co-RTWT. When the value of the first field is 0110, the first indication information indicates that the at least one coordination mode between the first device and the second device includes co-OFDMA and co-SR. Optionally, the first field may directly indicate an identifier of a coordination mode used between the first device and the second device. For example, identifiers of co-TDMA, co-OFDMA, co-SR, and co-RTWT are respectively 001, 010, 011, and 100. When the value of the first field is 001, the first indication information indicates that the at least one coordination mode between the first device and the second device includes co-TDMA.

For example, the first indication information may include at least two second fields, each second field corresponds to one coordination mode, and a value of the second field indicates whether the corresponding coordination mode is a coordination mode between the first device and the second device. For example, a 1^{st} second field to a 4^{th} second field respectively correspond to co-TDMA, co-OFDMA, co-SR, and co-RTWT, and values of the 1^{st} second field to the 4^{th} second field are respectively 1110. The first indication information indicates that the at least one coordination mode between the first device and the second device includes co-TDMA, co-OFDMA, or co-SR.

It should be understood that the coordination mode indicated by the first indication information in the first radio frame is a coordination mode that is recommended (that is, requested) to be used between the first device and the second device. The coordination mode indicated by the first indication information in the second radio frame is a coordination mode that is determined to be used between the first device and the second device, or the first indication information carried in the second radio frame is used to set up the transmission agreement.

When the transmission parameter includes valid duration, in the first example, the second example, and the fourth example, the first radio frame may carry the third indication information, and the third indication information indicates the valid duration of the transmission agreement. It should be understood that, after the transmission agreement is set up, in a first time constrained by the valid duration, the first device and the second device share a transmission resource. Optionally, after the transmission agreement is set up, if transmission resource sharing is not successfully initiated in the first time, the transmission agreement is suspended or ended, that is, the first device and the second device no longer use the transmission agreement to perform coordinated communication until the transmission agreement is enabled or reset up (that is, resumed).

In the first example, the third example, and the fourth example, the second radio frame may carry the third indication information. In the first example, a value of the third indication information carried in the second radio frame may be the same as or different from a value of the third indication information carried in the first radio frame. When the value of the third indication information carried in the second radio frame is the same as the value of the third indication information carried in the first radio frame, it indicates that the second device agrees with the valid duration requested by the first device. When the value of the third indication information carried in the second radio frame is different from the value of the third indication information carried in the first radio frame, the transmission agreement is set up based on the third indication information carried in the second radio frame, that is, the transmission agreement uses the valid duration indicated by the third indication information carried in the second radio frame.

In the second example, the second radio frame may carry information indicating whether the valid duration is determined. Alternatively, the second radio frame may carry the information indicating whether the transmission agreement is successfully set up. When the information in the second radio frame indicates that the transmission agreement is successfully set up, the valid duration is determined. When the information in the second radio frame indicates that the transmission agreement fails to be set up, the valid duration is not determined.

It should be understood that the valid duration indicated by the third indication information in the first radio frame is valid duration of a recommended (that is, requested) transmission agreement, and the valid duration indicated by the third indication information in the second radio frame is valid duration of a determined transmission agreement, in other words, the third indication information carried in the second radio frame is used to set up the transmission agreement.

A start moment of the first time that is constrained by the valid duration may be determined based on a time at which transmission resource sharing is successfully initiated for a last time, for example, may be determined by the second device based on a time at which the first device successfully initiates transmission resource sharing for a last time, or may be determined by the first device based on a time at which the second device successfully initiates transmission resource sharing for a last time. For example, the start moment of the first time is determined based on the time at which the first device successfully initiates transmission resource sharing for the last time. The start moment of the first time may be a receiving time of a radio frame (for example, a fourth radio frame below) sent when the first device successfully initiates transmission resource sharing for the last time. Alternatively, the start moment of the first time may be an end time of a data frame (or another radio frame, for example, a trigger frame) sent after the second device receives the radio frame (for example, the fourth radio frame below) sent when the transmission resource sharing is successfully initiated for the last time.

Optionally, in a case in which transmission resource sharing fails to be initiated after the transmission agreement is set up, the start moment of the first time may be determined based on a time at which the transmission agreement is set up. For example, the start moment of the first time may be a sending time, a receiving time, or a sending completion time of the second radio frame.

For example, the first device may start a timer after the transmission agreement is set up, and set a value of the timer to the valid duration. Before timing (including countdown or positive timing) of the timer reaches the valid duration, the first device may receive transmission resource sharing initiated by the second device, and reset the timer when the second device successfully initiates transmission resource sharing, for example, reset timing of the timer to an initial value. After timing (including countdown or count-up) of the timer reaches the valid duration, the first device determines that the second device fails to initiate transmission resource sharing. The timer may also be started on a side of the second device, and an equivalent operation is performed. For brevity, details are not described again.

As described above, the first device may be a sharing device or a shared device. When the first device is a sharing device, the second device may be a shared device, that is, the first device may initiate resource sharing to the second device. When the first device is a shared device, the second device may be a sharing device, that is, the second device may initiate resource sharing to the first device. Therefore, whether transmission resource sharing is successfully initiated in the first time may include: whether the first device successfully initiates resource sharing in the first time, or whether the second device successfully initiates resource sharing in the first time.

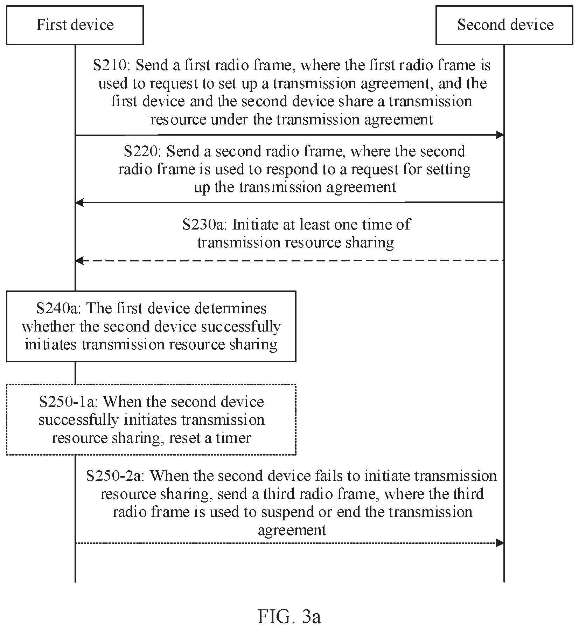

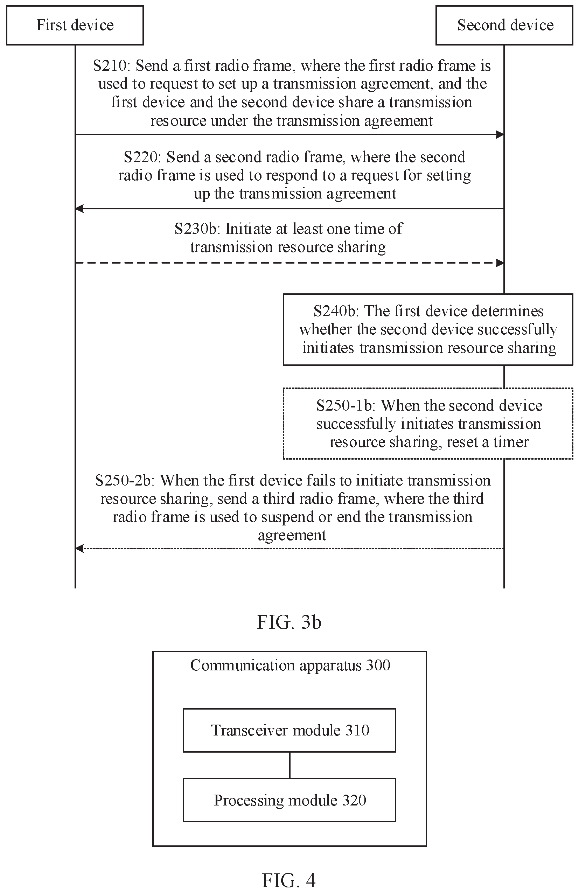

With reference to FIG. 3a and FIG. 3b, the following separately provides examples for different sharing devices.

As shown in FIG. 3a, the second device is a sharing device, and the first device is a shared device. In the coordinated communication method, after the transmission agreement is set up, some or all of the following processes may be included.

S230a: The second device initiates at least one time of transmission resource sharing to the first device. Correspondingly, the first device receives the at least one time of transmission resource sharing from the second device.

S240a: The first device determines whether the second device successfully initiates transmission resource sharing.

S250-1a: When the second device successfully initiates transmission resource sharing, the first device resets the timer.

S250-2a: When the second device fails to initiate transmission resource sharing, the first device sends a third radio frame to the second device, where the third radio frame is used to suspend or end the transmission agreement. Correspondingly, the second device receives the third radio frame from the first device.

In S230a, when initiating one time of transmission resource sharing to the first device, the second device may indicate a second resource based on second resource indication information. The first device may determine, based on a transmission resource (for example, the second resource) indicated by the second device during the one time of transmission resource sharing, whether the second device successfully initiates transmission resource sharing. Alternatively, the first device may determine, based on transmission resources (for example, including two or more second resources) indicated by the second device during a plurality of (for example, two or more) times of transmission resource sharing, whether the second device successfully initiates transmission resource sharing. Optionally, when the transmission resource includes two or more second resources, the transmission resource may be obtained by accumulating the included second resources.

For example, when the transmission resource indicated by the second device when the second device initiates transmission resource sharing meets the following first condition, the first device may determine that transmission resource sharing is successfully initiated.

The first condition includes at least one of the following:
1. Duration of the transmission resource is greater than or equal to a first threshold, and the duration of the transmission resource may be a length or a size of a time domain resource occupied by the transmission resource.
2. A bandwidth of the transmission resource is greater than or equal to a second threshold, the bandwidth of the transmission resource may be a size of a frequency domain resource occupied by the transmission resource, and the frequency domain resource occupied by the transmission resource may be a contiguous frequency range or a plurality of non-contiguous frequency ranges.
3. A time-frequency domain size of the transmission resource is greater than or equal to a third threshold, and the time-frequency domain size is a product of the duration and the bandwidth of the transmission resource.
4. A power of the transmission resource is greater than or equal to a fourth threshold.
5. A quantity of bits carried by the transmission resource is greater than or equal to a fifth threshold.

It should be understood that the first device determines, based on the first condition, that the transmission resource shared by the second device is sufficient, for example, the transmission resource can meet data transmission of the first device in coordinated communication.

For example, a threshold in the first condition, for example, at least one of the first threshold to the fifth threshold, may be agreed on in the agreement, or the first device and the second device may negotiate the threshold in the first condition.

For example, in the first example, the second example, and the fourth example, the first radio frame may carry fifth indication information, and the fifth indication information indicates at least one of the first threshold, the second threshold, the third threshold, the fourth threshold, and the fifth threshold. In the first example, the third example, and the fourth example, the second radio frame may carry fifth indication information. In the first example, a value of the fifth indication information carried in the second radio frame may be the same as or different from a value of the fifth indication information carried in the first radio frame. When the two values are different, the transmission agreement is set up based on the fifth indication information carried in the second radio frame. In other words, the fifth indication information carried in the second radio frame indicates at least one of the first threshold, the second threshold, the third threshold, the fourth threshold, and the fifth threshold.

It should be noted that, when the transmission resource includes one second resource, the first device may determine, after the second device initiates one time of transmission resource sharing, whether the transmission resource sharing succeeds. When the transmission resource includes two or more second resources, the first device may determine, when accumulated second resources exceed the threshold (for example, at least one of the first threshold to the fifth threshold) in the first condition, that the second device successfully initiates transmission resource sharing.

Based on this, the first radio frame and/or the second radio frame may carry fourth indication information, and the fourth indication information indicates that the transmission resource is a resource indicated when one time of transmission resource sharing is initiated, or the fourth indication information indicates that the transmission resource includes resources indicated during at least two times of transmission resource sharing. In other words, the fourth indication information indicates that a determining process of determining whether transmission resource sharing is successfully initiated is single-time determining or accumulated-time determining.

For example, in the first example, the second example, and the fourth example, the first radio frame may carry the fourth indication information. In the first example, the third example, and the fourth example, the second radio frame may carry the fourth indication information. In the first example, a value of the fourth indication information carried in the second radio frame may be the same as or different from a value of the fourth indication information carried in the first radio frame. When the two values are different, the transmission agreement is set up based on the fourth indication information carried in the second radio frame. In other words, it is determined, based on the fourth indication information carried in the second radio frame, that the transmission resource is the resource indicated when one time of transmission resource sharing is initiated, or the transmission resource includes the resources indicated during at least two times of transmission resource sharing.

In addition, the first device may determine, after the second device initiates transmission resource sharing of the accumulated times, whether the transmission resource sharing succeeds. The accumulated times may be agreed on in the agreement, or may be negotiated by the first device and the second device based on the first radio frame and the second radio frame.

Optionally, when determining that the second device successfully initiates transmission resource sharing, the first device resets the timer, to maintain validity of the transmission agreement, so that further coordinated communication can be implemented. When determining that the second device fails to initiate transmission resource sharing, the first device sends the third radio frame, to suspend or end the transmission agreement, so as to reduce communication overheads.

S230a is an optional process. For example, the second device may not initiate transmission resource sharing. In this case, S250-2a is performed.

As shown in FIG. 3b, the first device is a sharing device, and the second device is a shared device. In the coordinated communication method, after the transmission agreement is set up, the following may be included.

S230b: The first device initiates at least one time of transmission resource sharing to the second device. Correspondingly, the second device receives the at least one time of transmission resource sharing from the first device.

S240b: The second device determines whether the first device successfully initiates transmission resource sharing.

S250-1b: When the first device successfully initiates transmission resource sharing, the second device resets the timer.

S250-2b: When the first device fails to initiate transmission resource sharing, the second device sends the third radio frame to the first device. Correspondingly, the first device receives the third radio frame from the second device.

Similar to S230a, in S230b, when initiating one time of transmission resource sharing to the second device, the first device may indicate the first resource based on first resource indication information. The second device may determine, based on a transmission resource (for example, the first resource) indicated by the first device during one time of transmission resource sharing, whether the first device successfully initiates transmission resource sharing. Alternatively, the second device may determine, based on transmission resources (for example, including two or more first resources) indicated by the first device during a plurality of (for example, two or more) times of transmission resource sharing, whether the first device successfully initiates transmission resource sharing.

For example, when the transmission resource indicated by the first device when the first device initiates transmission resource sharing meets the first condition, the second device may determine that transmission resource sharing is successfully initiated. For the first condition, refer to descriptions in the foregoing example. For brevity, details are not described again.

It should be understood that the second device determines, based on the first condition, that the transmission resource shared by the first device is sufficient, for example, can meet data transmission of the second device in coordinated communication.

The second device may perform single-time determining or accumulated-time determining on whether the first device successfully initiates transmission resource sharing. This is not limited in this application. For a specific implementation, refer to corresponding steps in FIG. 3a. For brevity, details are not described again.

Optionally, when determining that the first device successfully initiates transmission resource sharing, the second device resets the timer, to maintain validity of the transmission agreement, so that further coordinated communication can be implemented. When determining that the first device fails to initiate transmission resource sharing, the second device sends the third radio frame, to suspend or end the transmission agreement, so as to avoid communication overhead reduction.

S230b is an optional process. For example, the second device may not initiate transmission resource sharing. In this case, S250-b is performed.

The steps in FIG. 3b and the corresponding steps in FIG. 3a are equivalent implementations. For brevity, corresponding technical solutions and technical effects are not described again.

In some embodiments, a size of the transmission resource indicated when the first device initiates transmission resource sharing may be agreed on in the agreement, or may be negotiated between the first device and the second device. Similarly, a size of the transmission resource indicated when the second device initiates transmission resource sharing may be agreed on in the agreement, or may be negotiated between the first device and the second device. It should be understood that the size of the transmission resource agreed on in the agreement or negotiated by the first device and the second device may be a size of the resource indicated when one time of transmission resource sharing is initiated, or an accumulation of sizes of resources indicated when a plurality of times of transmission resource sharing are initiated.

For example, in the first example, the second example, and the fourth example, the first radio frame may carry sixth indication information, and the sixth indication information indicates at least one of the duration of the transmission resource, the bandwidth of the transmission resource, the time-frequency domain size of the transmission resource, the power of the transmission resource, and the quantity of bits carried by the transmission resource. In the first example, the third example, and the fourth example, the second radio frame may carry the sixth indication information. In the first example, a value of the sixth indication information carried in the second radio frame may be the same as or different from a value of the sixth indication information carried in the first radio frame. When the two values are different, the transmission agreement is set up based on the sixth indication information carried in the second radio frame. In other words, the sixth indication information carried in the second radio frame indicates at least one of the duration of the transmission resource, the bandwidth of the transmission resource, the time-frequency domain size of the transmission resource, the power of the transmission resource, and the quantity of bits carried by the transmission resource.

A size of the transmission resource indicated by the fourth radio frame should be greater than or equal to a size of the transmission resource indicated by the sixth indication information. The transmission resource indicated by the fourth radio frame should meet at least one of the following:

Duration of the transmission resource indicated by the fourth radio frame is greater than or equal to the duration indicated by the sixth indication information;
a bandwidth of the transmission resource indicated by the fourth radio frame is greater than or equal to the bandwidth indicated by the sixth indication information;
a time-frequency domain size of the transmission resource indicated by the fourth radio frame is greater than or equal to the time-frequency domain size indicated by the sixth indication information;
a power of the transmission resource indicated by the fourth radio frame is greater than or equal to the power indicated by the sixth indication information; and
a quantity of bits carried by the transmission resource indicated by the fourth radio frame is greater than or equal to the quantity of bits indicated by the sixth indication information.

In the foregoing S230a, that the second device initiates transmission resource sharing to the first device may be that the second device sends the fourth radio frame to the first device, where the fourth radio frame carries the second resource indication information, and the second resource indication information indicates the second resource occupied by the first device when the first device performs communication according to the transmission agreement.

In the foregoing S230b, that the first device initiates transmission resource sharing to the second device may be that the first device sends the fourth radio frame to the second device, where the fourth radio frame carries the first resource indication information, and the first resource indication information indicates the first resource occupied by the second device when the second device performs communication according to the transmission agreement.

After receiving the fourth radio frame, the shared device (for example, the first device in FIG. 3a or the second device in FIG. 3b) needs to perform processing of a period of time before performing transmission. To prevent a frame interaction sequence from being interrupted, the sharing device (for example, the second device in FIG. 3a or the first device in FIG. 3b) may add a padding bit to the fourth radio frame, to prolong a transmission time of the fourth radio frame, so that the shared device has a sufficient time to perform preparation processing, and can perform transmission after a short time after receiving the fourth radio frame, to ensure continuity of the frame interaction sequence. Therefore, the first device and the second device need to notify the peer device of processing duration (that is, a processing delay) of the local device, so that when the peer device is used as a sharing device, the peer device adds sufficient padding bits when sending the fourth radio frame.

For example, in the embodiment shown in FIG. 3a, the fourth radio frame carries the first resource indication information and at least one bit, duration occupied by the at least one bit is greater than or equal to first duration, and the first duration is processing duration for performing communication by the first device according to the transmission agreement. For example, in the embodiment shown in FIG. 3b, the fourth radio frame carries the second resource indication information and at least one bit, duration occupied by the at least one bit is greater than or equal to second duration, and the second duration is processing duration for performing communication by the second device according to the transmission agreement.

Based on the foregoing example, the first device may indicate, to the second device, processing duration for performing communication by the first device according to the transmission agreement. For example, the first radio frame sent by the first device to the second device may carry seventh indication information, and the seventh indication information indicates duration for processing the fourth radio frame by the first device, in other words, when the second device sends the fourth radio frame to the first device, duration occupied by a padding bit (for example, the at least one bit) that needs to be added to the fourth radio frame. Optionally, when there are at least two coordination modes between the first device and the second device, the seventh indication information indicates processing duration respectively corresponding to the first device in the at least two coordination modes.

The second device may indicate, to the first device, processing duration for performing communication by the second device according to the transmission agreement. For example, the second radio frame sent by the second device to the first device may carry eighth indication information, and the eighth indication information indicates duration for processing the fourth radio frame by the second device, in other words, when the first device sends the fourth radio frame to the second device, duration occupied by a padding bit (for example, the at least one bit) that needs to be added to the fourth radio frame. Optionally, when there are at least two coordination modes between the first device and the second device, the eighth indication information indicates processing duration respectively corresponding to the second device in the at least two coordination modes.

The transmission parameter may include an identifier of the transmission agreement. When the transmission parameter includes the identifier of the transmission agreement, in the first example, the second example, and the fourth example, the first radio frame may carry ninth indication information, and the ninth indication information indicates the identifier of the transmission agreement. In the first example, the third example, and the fourth example, the second radio frame may carry the ninth indication information. In the first example, a value of the ninth indication information carried in the second radio frame may be the same as or different from a value of the ninth indication information carried in the first radio frame. When the two values are different, the ninth indication information carried in the second radio frame may be used to set up the transmission agreement. In other words, the ninth indication information carried in the second radio frame indicates the identifier of the transmission agreement.

The following Table 1 is a diagram of a frame structure of the first radio frame, and the following Table 2 is a diagram of a frame structure of the second radio frame. The following describes the first radio frame and the second radio frame by using examples with reference to Table 1 and Table 2.

**Table 1**

| Order (order) | Meaning (meaning) |
|---|---|
| 1 | Category (category) |
| 2 | Ultra high reliable action (UHR action) |
| 3 | Dialog token (dialog token) |
| 4 | Multi-AP control (MAP control) |
| 5 | Coordinated spatial reuse parameter set (CSR parameter set) (optional) |
| 6 | Coordinated time division multiple access (CTDMA parameter set) (optional) |
| 7 | Coordinated orthogonal frequency division multiple access (COFDMA |
| | parameter set) (optional) |

**Table 2**

| Order (order) | Meaning (meaning) |
|---|---|
| 1 | Category (category) |
| 2 | Ultra high reliable action (UHR action) |
| 3 | Dialog token (dialog token) |
| 4 | Status code/Status code list (status code/status code list) |
| 5 | Multi-AP control (MAP control) |
| 6 | Coordinated spatial reuse parameter set (CSR parameter set) (optional) |
| 7 | Coordinated time division multiple access (CTDMA parameter set) (optional) |
| 8 | Coordinated orthogonal frequency division multiple access (COFDMA parameter set) (optional) |

Herein, the category field indicates a category of the action frame. For the 802.11bn standard, a value of the category indicates being ultra high reliable (ultra high reliable, UHR). Both the first radio frame and the second radio frame may be UHR action frames.

The UHR action field indicates a UHR action frame to which the frame belongs. For example, the first radio frame is a multi-AP transmission agreement setup request frame (Multi-AP transmission agreement setup request frame or MAP Agreement Setup Request for short), and the second radio frame is a multi-AP agreement setup response (MAP Agreement Setup Response).

The dialog token field is used to identify a pair of a request and a response.

The status code field carried in the second radio frame indicates whether setup succeeds. Alternatively, the status code list field may be carried. The status code list field includes a plurality of status codes, and each status code corresponds to one coordination mode, and indicates whether the coordination mode is successfully set up.

The MAP control field may carry some or all of the first, third to sixth, eighth, and ninth indication information. A frame structure is shown in Table 3 below.

**Table 3**

| | | | | | | |
|---|---|---|---|---|---|---|
| Coordinated spatial reuse enabled (CSR enabled) | Coordinated time division multiple access (CTDMA enabled) | Coordinated orthogonal frequency division multiple access (COFDMA enabled) | Identifier of the transmission agreement (agreement ID) | Multi-AP valid duration (MAP timeout) | Multi-AP maintenance threshold (MAP maintenance threshold) | Accumulated -time determining (accumulate) |

As shown in Table 3, the first indication information is carried in the CSR enabled, the CTDMA enabled, or the COFDMA enabled field.

As shown in Table 3, the third indication information is carried in the MAP timeout field.

As shown in Table 3, the fourth indication information is carried in the accumulate field.

As shown in Table 3, the fifth indication information and/or the sixth indication information are/is carried in the MAP maintenance threshold field.

As shown in Table 3, the ninth indication information is carried in the agreement ID field.

The CSR parameter set field corresponds to a parameter in a coordinated spatial reuse coordination mode. A frame structure is shown in Table 4 below.

**Table 4**

| | |
|---|---|
| Coordinated spatial reuse padding delay (CSR padding delay) | Minimum allowed power (minimum allowed power) |

As shown in Table 4, the seventh indication information and/or the eighth indication information are/is carried in the CSR padding delay field. The seventh indication information may be carried in the CSR padding delay field of the first radio frame, and the eighth indication information may be carried in the CSR padding delay field of the second radio frame.

The fifth indication information may also be carried in the minimum allowed power field. Indication: a minimum power allocated for one time of valid sharing.

The CTDMA parameter set corresponds to a parameter in a coordinated time division multiple access coordination mode. A frame structure is shown in Table 5 below.

**Table 5**

| | |
|---|---|
| Coordinated time division multiple access padding delay (CTDMA padding delay) | Minimum duration (minimum duration) |

As shown in Table 5, the seventh indication information and/or the eighth indication information are/is carried in the CTDMA padding delay field. The seventh indication information may be carried in the CTDMA padding delay field of the first radio frame, and the eighth indication information may be carried in the CTDMA padding delay field of the second radio frame.

The fifth indication information may also be carried in the minimum duration field. Indication: minimum duration allocated for one time of valid sharing.

The COFDMA parameter set corresponds to a parameter in a coordinated orthogonal frequency division multiple access coordination mode. A frame structure is shown in Table 6 below.

**Table 6**

| | |
|---|---|
| Coordinated orthogonal frequency division multiple access padding delay (COFDMA padding delay) | Minimum bandwidth (minimum bandwidth) |

As shown in Table 6, the seventh indication information and/or the eighth indication information are/is carried in the COFDMA padding delay field. The seventh indication information may be carried in the COFDMA padding delay field of the first radio frame, and the eighth indication information may be carried in the COFDMA padding delay field of the second radio frame.

The fifth indication information may also be carried in the minimum bandwidth field. Indication: a minimum bandwidth allocated for one time of valid sharing.

The fields in the radio frames (including the first radio frame and/or the second radio frame) are merely examples for description. In an actual application scenario, more or fewer fields may be included.

Therefore, in this embodiment of this application, the first device sends the first radio frame to the second device, and receives the second radio frame from the second device, and the transmission agreement is set up between the first device and the second device, so that the first device and the second device share a transmission resource under the transmission agreement, to provide a basis for implementing multi-device coordinated transmission.

To maintain and manage the transmission agreement between the first device and the second device, this application may further include the following possible embodiments. Under the transmission agreement, the first device and the second device share the transmission resource. Optionally, the transmission agreement may be set up between the first device and the second device in the foregoing example, or the transmission agreement may be preset. The preset transmission agreement may be a preset-up transmission agreement. A manner of setting up the transmission agreement is not limited in this application.

Optionally, the first device and the second device may determine the identifier of the transmission agreement for the transmission agreement. The transmission agreement may be a preset-up transmission agreement, or may be a transmission agreement negotiated between the first device and the second device in the foregoing example.

Embodiment 1: When the first device or the second device does not need to perform multi-device coordinated communication temporarily, the transmission agreement may be suspended. For example, the first device sends a fifth radio frame to the second device, and correspondingly, the second device receives the fifth radio frame from the first device; or the second device sends a fifth radio frame to the first device, and correspondingly, the first device receives the fifth radio frame from the second device. The fifth radio frame indicates to suspend (or pause) the transmission agreement.

Optionally, the fifth radio frame carries the identifier of the transmission agreement.

The following Table 7 shows a possible frame structure of the fifth radio frame.

**Table 7**

| Order (order) | Meaning (meaning) |
|---|---|
| 1 | Category (category) |
| 2 | Ultra high reliable action (UHR action) |
| 3 | Identifier of the transmission agreement (agreement ID) |

A value of the UHR action field indicates that the fifth radio frame is used to suspend the transmission agreement. The agreement ID field indicates an agreement that needs to be suspended.

The fields in the fifth radio frame are merely examples for description. In an actual application scenario, more or fewer fields may be included.

Embodiment 2: When the first device and the second device need to perform coordinated communication, a suspended agreement may be resumed. For example, the first device sends a sixth radio frame to the second device, and correspondingly, the second device receives the sixth radio frame from the first device; or the second device sends a sixth radio frame to the first device, and correspondingly, the first device receives the sixth radio frame from the second device.

The sixth radio frame indicates to enable (or resume) the transmission agreement. For example, the sixth radio frame may further indicate, after the transmission agreement is set up, to enable the transmission agreement, or indicate to resume the suspended (or paused or ended) transmission agreement. This is not limited in this application.

Optionally, the sixth radio frame carries the identifier of the transmission agreement.

The following Table 8 shows a possible frame structure of the sixth radio frame.

**Table 8**

| Order (order) | Meaning (meaning) |
|---|---|
| 1 | Category (category) |
| 2 | Ultra high reliable action (UHR action) |
| 3 | Identifier of the transmission agreement (agreement ID) |

A value of the UHR action field indicates that the sixth radio frame is used to resume the transmission agreement. The agreement ID field indicates an agreement that needs to be resumed.

The fields in the sixth radio frame are merely examples for description. In an actual application scenario, more or fewer fields may be included.

Embodiment 3: When the first device and/or the second device need/needs to modify the transmission parameter of the transmission agreement, the transmission agreement may be reconfigured. For example, the first device sends a seventh radio frame to the second device, and correspondingly, the second device receives the seventh radio frame from the first device; or the second device sends a seventh radio frame to the first device, and correspondingly, the first device receives the seventh radio frame from the second device.

The seventh radio frame may be used to reconfigure the transmission agreement, for example, reconfigure some or all transmission parameters of the transmission agreement. When the seventh radio frame indicates to reconfigure some transmission parameters in the transmission agreement, indication information corresponding to the parameter that needs to be reconfigured may be carried. A field of indication information corresponding to a parameter that does not need to be reconfigured may be empty, or a value of the indication information corresponding to the parameter that does not need to be reconfigured is consistent with a value existing when the transmission agreement is set up for the first time.

Optionally, the seventh radio frame carries the identifier of the transmission agreement.

The following Table 9 shows a possible frame structure of the seventh radio frame.

**Table 9**

| Order (order) | Meaning (meaning) |
|---|---|
| 1 | Category (category) |
| 2 | Ultra high reliable action (UHR action) |
| 3 | Dialog token (dialog token) |
| 4 | Multi-AP control (MAP control) |
| 5 | Coordinated spatial reuse parameter set (CSR parameter set) (optional) |
| 6 | Coordinated time division multiple access (CTDMA parameter set) (optional) |
| 7 | Coordinated orthogonal frequency division multiple access (COFDMA parameter set) (optional) |

A value of the UHR action field indicates that the seventh radio frame is used to request to modify a transmission parameter of one or more transmission agreements. Descriptions of the fields 3 to 7 are similar to those of the request frame (for example, the first radio frame) for requesting the transmission agreement. For brevity, details are not described again.

The fields in the seventh radio frame are merely examples for description. In an actual application scenario, more or fewer fields may be included.

Based on Embodiment 3, after the first device sends the seventh radio frame to the second device, the second device may respond to the seventh radio frame. For example, the second device sends an eighth radio frame to the first device, and the eighth radio frame is used to respond to reconfiguration of the transmission agreement. Similarly, after the second device sends the seventh radio frame to the first device, the first device may send the eighth radio frame to the second device.

Optionally, the eighth radio frame carries the identifier of the transmission agreement.

The following Table 10 shows a possible frame structure of the eighth radio frame.

**Table 10**

| Order (order) | Meaning (meaning) |
|---|---|
| 1 | Category (category) |
| 2 | Ultra high reliable action (UHR action) |
| 3 | Dialog token (dialog token) |
| 4 | Status code/Status code list (status code/status code list) |
| 5 | Multi-AP control (MAP control) |
| 6 | Coordinated spatial reuse parameter set (CSR parameter set) (optional) |
| 7 | Coordinated time division multiple access (CTDMA parameter set) (optional) |
| 8 | Coordinated orthogonal frequency division multiple access (COFDMA parameter set) (optional) |

A value of the UHR action field indicates that the frame is used to respond to a request for modifying a transmission parameter of one or more transmission agreements. Descriptions of the fields 3 to 8 are similar to those of the response frame (for example, the second radio frame) for setting up the transmission agreement. For brevity, details are not described again.

The fields in the eighth radio frame are merely examples for description. In an actual application scenario, more or fewer fields may be included.

Embodiment 4: When the first device and/or the second device no longer need/needs the transmission agreement, the first device and/or the second device may delete the transmission agreement, to reduce communication overheads. For example, the first device sends a ninth radio frame to the second device, and correspondingly, the second device receives the ninth radio frame from the first device; or the second device sends a ninth radio frame to the first device, and correspondingly, the first device receives the ninth radio frame from the second device.

The ninth radio frame is used to delete the transmission agreement. Deleting the transmission agreement may include deleting content of the transmission agreement, for example, the transmission parameter, and may further include deleting a maintenance status of the transmission agreement.

Optionally, the ninth radio frame carries the identifier of the transmission agreement.

Optionally, the ninth radio frame may carry information indicating a reason for deleting the transmission agreement. Optionally, possible deletion reasons include but are not limited to: no coordinated communication requirement, no service requirement, communication system performance deterioration after use of coordinated communication, interference being greater than a threshold after use of coordinated communication, and the like.

The following Table 11 shows a possible frame structure of the ninth radio frame.

**Table 11**

| Order (order) | Meaning (meaning) |
|---|---|
| 1 | Category (category) |
| 2 | Ultra high reliable action (UHR action) |
| 3 | Identifier of the transmission agreement (agreement ID) |
| 4 | Reason code (reason code) |

A value of the UHR action field indicates that the ninth radio frame is used to delete one or more transmission agreements. The agreement ID field is used to identify a transmission agreement that needs to be deleted. The reason code field carries the information indicating a reason for deleting the transmission agreement.

The fields in the ninth radio frame are merely examples for description. In an actual application scenario, more or fewer fields may be included.

In Embodiment 1 to Embodiment 4, maintenance and management of the transmission agreement are implemented through interaction between the first device and the second device, so that multi-device coordinated transmission can be performed more efficiently and continuously.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

FIG. 4 is a block diagram of a communication apparatus according to an embodiment of this application. The communication apparatus 300 may be the first device or the second device in the foregoing descriptions, or may be an apparatus in the first device or the second device. In a possible implementation, the communication apparatus 300 may include modules or units that one-to-one correspond to the methods/operations/steps/actions performed by the first device or the second device in the foregoing method embodiments. The modules may be implemented by a hardware circuit, software, or a combination of a hardware circuit and software. In a possible implementation, as shown in FIG. 4, the apparatus 300 may include a transceiver module 310 and a processing module 320.

Optionally, the communication apparatus 300 may correspond to the first device in the foregoing method embodiments.

When the communication apparatus 300 is configured to perform the method on a first device side, the transceiver module 310 may be configured to send a first radio frame to the second device, where the first radio frame is used to request to set up a transmission agreement, and the first device and the second device share a transmission resource under the transmission agreement; and the transceiver module 310 may be configured to receive a second radio frame from the second device, where the second radio frame is used to respond to a request for setting up the transmission agreement. In some embodiments, the processing module 320 may be configured to determine the first radio frame, and/or the processing module 320 may be configured to determine and/or store the transmission agreement.

It should be understood that specific processes performed by the modules are described in detail in the foregoing method embodiments. For brevity, details are not described herein again.

Optionally, the communication apparatus 300 may correspond to the second device in the foregoing method embodiments.

When the communication apparatus 300 is configured to perform the method on a second device side, the transceiver module 310 may be configured to receive a first radio frame from the first device, where the first radio frame is used to request to set up a transmission agreement, and the first device and the second device share a transmission resource under the transmission agreement; and the transceiver module 310 may be further configured to send a second radio frame to the first device, where the second radio frame is used to respond to a request for setting up the transmission agreement. In some embodiments, the processing module 320 may be configured to determine the second radio frame, and/or the processing module 320 may be configured to determine and/or store the transmission agreement.

It should be understood that specific processes performed by the modules are described in detail in the foregoing method embodiments. For brevity, details are not described herein again.

When the communication apparatus 300 is a chip or a chip system configured in a communication device (for example, the first device or the second device), the transceiver module 310 in the communication apparatus 300 may be implemented through an input/output interface, a circuit, or the like, and the processing module 320 in the communication apparatus 300 may be implemented by using a processor, a microprocessor, an integrated circuit, or the like integrated on the chip or the chip system.

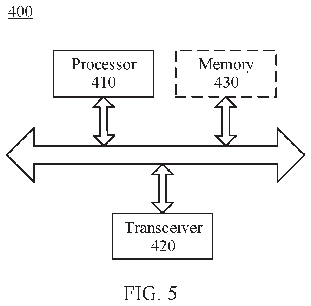

FIG. 5 is another block diagram of a communication apparatus according to an embodiment of this application. As shown in FIG. 5, the communication apparatus 400 may include a processor 410. The processor 410 may be configured to perform the method performed by the first terminal device or the second terminal device in the foregoing method embodiments.

In some possible implementations, the communication apparatus 400 may include a transceiver 420. The transceiver 420 and the processor 410 may communicate with each other through an internal connection path. The processor 410 may control the transceiver 420 to send a signal and/or receive a signal.

In some possible implementations, the communication apparatus 400 may include a memory 430. The memory 430 and the processor 410 may communicate with each other through an internal connection path. The memory 430 and the processor 410 may be integrated together, or may be disposed separately. The memory 430 may alternatively be a memory outside the apparatus. The memory 430 is configured to store instructions. The processor 410 is configured to execute the instructions stored in the memory 430, to implement the methods in the foregoing method embodiments.

It should be understood that the communication apparatus 400 may correspond to the first device or the second device in the foregoing method embodiments, and may be configured to perform steps and/or procedures performed by the first device or the second device in the foregoing method embodiments. Optionally, the memory 430 may include a read-only memory and a random access memory, and provide instructions and data for the processor. A part of the memory may further include a non-volatile random access memory. The memory 430 may be a separate component, or may be integrated in the processor 410. The processor 410 may be configured to execute the instructions stored in the memory 430. In addition, when the processor 410 executes the instruction stored in the memory, the processor 410 is configured to perform steps and/or procedures corresponding to the first device or the second device in the foregoing method embodiments.

Optionally, the communication apparatus 400 may correspond to the first device in the foregoing method embodiments.

Optionally, the communication apparatus 400 may correspond to the second device in the foregoing method embodiments.

The transceiver 420 may include a transmitter and a receiver. The transceiver 420 may further include an antenna, and there may be one or more antennas. The processor 410, the memory 430, and the transceiver 420 may be components integrated into different chips. For example, the processor 410 and the memory 430 may be integrated into a baseband chip, and the transceiver 420 may be integrated into a radio frequency chip. Alternatively, the processor 410, the memory 430, and the transceiver 420 may be components integrated into a same chip. This is not limited in this application.

Optionally, the communication apparatus 400 is a component configured in the first device, for example, a chip or a chip system.

Optionally, the communication apparatus 400 is a component configured in the second device, for example, a chip or a chip system.

Alternatively, the transceiver 420 may be a communication interface, for example, an input/output interface or a circuit. The transceiver 420, the processor 410, and the memory 430 may be integrated into a same chip, for example, integrated into the baseband chip.

This application further provides a processing apparatus, including at least one processor. The at least one processor runs a computer program or a logic circuit, so that the processing apparatus performs the method performed by the first device or the second device in the foregoing method embodiments. The processing apparatus may further include a memory. The memory is configured to store the computer program.

An embodiment of this application further provides a processing apparatus. The processing apparatus includes a processor and an input/output interface. The input/output interface is coupled to the processor. The input/output interface is configured to input and/or output information. The information includes at least one of instructions and data. The processor is configured to execute a computer program, so that the processing apparatus performs the method performed by the first device or the second device in the foregoing method embodiments.

An embodiment of this application further provides a processing apparatus. The processing apparatus includes a processor and a memory. The memory is configured to store a computer program, and the processor is configured to invoke the computer program from the memory and run the computer program, so that the processing apparatus performs the method performed by the first device or the second device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing methods may be implemented by using a hardware integrated logical circuit in the processor or instructions in a form of software. The steps of the methods disclosed with reference to embodiments of this application may be performed by a hardware processor, or may be performed through a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logical circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be performed by a hardware decoding processor, or may be performed through a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes a computer program or a group of instructions. When the computer program or the group of instructions is/are run on a computer, the computer is enabled to perform the method performed by the first device or the second device in the foregoing method embodiments.

According to the method provided in embodiments of this application, this application further provides a computer-readable storage medium. The computer-readable storage medium stores a program. When the program is run on a computer, the computer is enabled to perform the method performed by the first device or the second device in the foregoing method embodiments.

An embodiment of this application further provides a communication system, including the first device and the second device, or including a component of the first device and a component of the second device.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

## Claims

1. A coordinated communication method, applied to a first device and comprising:
sending a first radio frame to a second device, wherein the first radio frame is used to request to set up a transmission agreement, and the first device and the second device share a transmission resource under the transmission agreement; and
receiving a second radio frame from the second device, wherein the second radio frame is used to respond to a request for setting up the transmission agreement.

2. The method according to claim 1, wherein
the first radio frame carries first indication information, and the first indication information indicates at least one coordination mode between the first device and the second device; and
the second radio frame carries second indication information, and the second indication information indicates whether the at least one coordination mode is successfully set up.

3. The method according to claim 2, wherein
the first indication information comprises a first field, and a value of the first field indicates the at least one coordination mode; or
the first indication information comprises at least two second fields, each second field corresponds to one coordination mode, and a value of the second field indicates whether the corresponding coordination mode is a coordination mode between the first device and the second device.

4. The method according to claim 2 or 3, wherein the coordination mode comprises at least one of coordinated time division multiple access co-TDMA, coordinated orthogonal frequency division multiple access co-OFDMA, coordinated spatial reuse co-SR, or coordinated restricted target wake time co-RTWT.

5. The method according to any one of claims 1 to 4, wherein
the first radio frame carries third indication information, the third indication information indicates valid duration of the transmission agreement, and in a first time constrained by the valid duration, the first device and the second device share a transmission resource.

6. The method according to claim 5, wherein
the second radio frame carries the third indication information, and the third indication information carried in the second radio frame is used to set up the transmission agreement.

7. The method according to claim 5 or 6, wherein
when transmission resource sharing fails to be initiated in the first time, the transmission agreement is suspended or ended.

8. The method according to claim 7, wherein
when the second device fails to initiate transmission resource sharing, a third radio frame is sent to the second device; or
a third radio frame sent by the second device when the first device fails to initiate transmission resource sharing is received, wherein
the third radio frame is used to suspend or end the transmission agreement.

9. The method according to claim 7 or 8, wherein a start moment of the first time is determined based on a time at which transmission resource sharing is successfully initiated for a last time.

10. The method according to any one of claims 7 to 9, wherein in a case in which transmission resource sharing fails to be initiated after the transmission agreement is set up, the start moment of the first time is determined based on a time at which the transmission agreement is set up.

11. The method according to any one of claims 1 to 10, wherein a transmission resource indicated by the first device when the first device initiates transmission resource sharing meets the following first condition, the second device determines transmission resource sharing is successfully initiated; and/or
a transmission resource indicated by the second device when the second device initiates transmission resource sharing meets the following first condition, and the first device determines transmission resource sharing is successfully initiated; and
the first condition comprises at least one of the following:
duration of the transmission resource is greater than or equal to a first threshold;
a bandwidth of the transmission resource is greater than or equal to a second threshold;
a time-frequency domain size of the transmission resource is greater than or equal to a third threshold, and the time-frequency domain size is a product of the duration and the bandwidth of the transmission resource;
a power of the transmission resource is greater than or equal to a fourth threshold; and
a quantity of bits carried by the transmission resource is greater than or equal to a fifth threshold.

12. The method according to claim 11, wherein
the transmission resource comprises at least one first resource, and in a process of initiating one time of transmission resource sharing by the first device, first resource indication information sent to the second device indicates the first resource; or
the transmission resource comprises at least one second resource, and in a process of initiating one time of transmission resource sharing by the second device, second resource indication information from the second device indicates the second resource.

13. A coordinated communication method, applied to a second device and comprising:
receiving a first radio frame from a first device, wherein the first radio frame is used to request to set up a transmission agreement, and the first device and the second device share a transmission resource under the transmission agreement; and
sending a second radio frame to the first device, wherein the second radio frame is used to respond to a request for setting up the transmission agreement.

14. The method according to claim 13, wherein
the first radio frame carries first indication information, and the first indication information indicates at least one coordination mode between the first device and the second device; and
the second radio frame carries second indication information, and the second indication information indicates whether the at least one coordination mode is successfully set up.

15. The method according to claim 14, wherein
the first indication information comprises a first field, and a value of the first field indicates the at least one coordination mode; or
the first indication information comprises at least two second fields, each second field corresponds to one coordination mode, and a value of the second field indicates whether the corresponding coordination mode is a coordination mode between the first device and the second device.

16. The method according to claim 14 or 15, wherein the coordination mode comprises at least one of co-TDMA, co-OFDMA, co-SR, or co-RTWT.

17. The method according to any one of claims 13 to 16, wherein
the first radio frame carries third indication information, the third indication information indicates valid duration of the transmission agreement, and in a first time constrained by the valid duration, the first device and the second device share a transmission resource.

18. The method according to claim 17, wherein
the second radio frame carries the third indication information, and the third indication information carried in the second radio frame is used to set up the transmission agreement.

19. The method according to claim 17 or 18, wherein
when transmission resource sharing fails to be initiated in the first time, the transmission agreement is suspended or ended.

20. The method according to claim 19, wherein
a third radio frame sent by the first device when the second device fails to initiate transmission resource sharing is received; or
when the first device fails to initiate transmission resource sharing, a third radio frame is sent to the first device, wherein
the third radio frame is used to suspend or end the transmission agreement.

21. The method according to claim 19 or 20, wherein a start moment of the first time is determined based on a time at which transmission resource sharing is successfully initiated for a last time.

22. The method according to any one of claims 19 to 21, wherein in a case in which transmission resource sharing fails to be initiated after the transmission agreement is set up, the start moment of the first time is determined based on a time at which the transmission agreement is set up.

23. The method according to any one of claims 13 to 22, wherein a transmission resource indicated by the first device when the first device initiates transmission resource sharing meets the following first condition, and/or a transmission resource indicated by the second device when the second device initiates transmission resource sharing meets the following first condition, and transmission resource sharing is successfully initiated; and
the first condition comprises at least one of the following:
duration of the transmission resource is greater than or equal to a first threshold;
a bandwidth of the transmission resource is greater than or equal to a second threshold;
a time-frequency domain size of the transmission resource is greater than or equal to a third threshold, and the time-frequency domain size is a product of the duration and the bandwidth of the transmission resource;
a power of the transmission resource is greater than or equal to a fourth threshold; and
a quantity of bits carried by the transmission resource is greater than or equal to a fifth threshold.

24. The method according to claim 23, wherein
the transmission resource comprises at least one first resource, and in a process of initiating one time of transmission resource sharing by the first device, first resource indication information received from the first device indicates the first resource; or
the transmission resource comprises at least one second resource, and in a process of initiating one time of transmission resource sharing by the second device, second resource indication information sent to the first device indicates the second resource.

25. A communication apparatus, comprising a module configured to perform the method according to any one of claims 1 to 12.

26. A communication apparatus, comprising a module configured to perform the method according to any one of claims 13 to 24.

27. A chip, comprising a processor, configured to invoke computer instructions from a memory and run the computer instructions, so that a device to which the chip is mounted performs the method according to any one of claims 1 to 12.

28. A chip, comprising a processor, configured to invoke computer instructions from a memory and run the computer instructions, so that a device to which the chip is mounted performs the method according to any one of claims 13 to 24.

29. A computer-readable storage medium, configured to store computer program instructions, wherein the computer program instructions enables a computer to perform the method according to any one of claims 1 to 12.

30. A computer-readable storage medium, configured to store computer program instructions, wherein the computer program enables a computer to perform the method according to any one of claims 13 to 24.
